# EUROPEAN PATENT APPLICATION

(11) **EP 4 325 638 A2**
(43) Date of publication of application: **21.02.2024**
(21) Application number: 23188309.1
(22) Date of filing: 28.07.2023
(51) Int. Cl.: H01M 50/131, H01M 50/152, H01M 50/171, H01M 50/172, H01M 50/183, H01M 50/188, H01M 50/536, H01M 50/564

(54) **BATTERY CELL**

(30) Priority: 28.07.2022 JP 2022120677; 28.07.2022 JP 2022120262; 12.08.2022 JP 2022128736; 16.09.2022 JP 2022147683; 20.09.2022 JP 2022148823
(71) Applicant: AESC Japan Ltd., Kanagawa, 2520012 (JP)
(72) Inventor: OOKA, Aika, Zama-shi, 252-0012 (JP)
(74) Representative: Mathys & Squire

(57) **Abstract**

A battery cell (10A) includes a battery element (100A), a front lid member (210A) covering one end portion of the battery element (100A) in a predetermined direction, and an exterior film (300A) at least partially wrapped around the predetermined direction of the battery element (100A). The exterior film (300A) is rounded along the battery element (100A) in at least one corner of the battery element (100A) around the predetermined direction.

## Description

This application is based on Japanese patent application NO. 2022-120262, filed on July 28, 2022, Japanese patent application NO. 2022-120677, filed on July 28, 2022, Japanese patent application NO. 2022-128736, filed on August 12, 2022, Japanese patent application NO. 2022-147683, filed on September 16, 2022, and Japanese patent application NO. 2022-148823, filed on September 20, 2022, the content of which is incorporated hereinto by reference.

### TECHNICAL FIELD

The present invention relates to a battery cell.

### BACKGROUND ART

In recent years, various structures of a battery cell such as a lithium-ion secondary battery cell have been developed. For example, a battery cell described in WO 2021/157731 A1, JP 2011-108623 A, and JP 2011-108626 A includes a battery element, two lid members, and an exterior film. The two lid members cover both end portions of the battery element in a longitudinal direction. The exterior film is wrapped around the longitudinal direction of the battery element.

### SUMMARY

### (Aspect 1)

For example, in the battery cell described in WO 2021/157731 A1, JP 2011-108623 A, and JP 2011-108626 A, the exterior film may not be sufficiently strongly wrapped around the battery element. In this case, volume of the battery cell may not be sufficiently small. Thus, a volume energy density of the battery cell may not be sufficiently great.

One example of an object of aspect 1 according to the present invention is to improve a volume energy density of a battery cell. Another object of aspect 1 according to the present invention will become apparent from the description of the present specification.

### (Aspect 2)

For example, in the battery cell described in WO 2021/157731 A1, the exterior film includes a wrapped portion wrapped around the battery element, and two drawn portions drawn from the wrapped portion. A sealing portion is formed by binding the two drawn portions to each other. In this structure, however, suppressing protrusion of the sealing portion requires folding the sealing portion.

One example of an object of aspect 2 according to the present invention is to suppress protrusion of a sealing portion of an exterior film. Another object of aspect 2 according to the present invention will become apparent from the description of the present specification.

### (Aspect 3)

For example, in the battery cell described in WO 2021/157731 A1, an end portion of the exterior film is exposed with the exterior film wrapped around the lid member. The exposed end portion of the exterior film may make it difficult to suppress a short circuit of the exterior film via a conductor such as a conductive sheet included in the exterior film.

One example of an object of aspect 3 according to the present invention is to suppress exposure of an end portion of an exterior film. Another object of aspect 3 according to the present invention will become apparent from the description of the present specification.

### (Aspect 4)

For example, in the battery cell described in JP 2011-108623 A, a wrinkle may be formed in the exterior film due to a distortion in a shape of the exterior film. The presence of the wrinkle of the exterior film around the battery element may however cause transfer of the wrinkle to the battery element. This may make the wrinkle affect a characteristic of the battery cell.

One example of an object of aspect 4 according to the present invention is to stabilize a characteristic of a battery cell. Another object of aspect 4 according to the present invention will become apparent from the description of the present specification.

### (Aspect 5)

Certain strength may be required in a longitudinal direction of a battery cell. The battery cell described in JP 2011-108626 A, for example, however, may have difficulty securing strength in a longitudinal direction of the battery cell by the battery element alone.

One example of an object of aspect 5 according to the present invention is to secure strength of a battery cell in a longitudinal direction. Another object of aspect 5 according to the present invention will become apparent from the description of the present specification.

Aspect 1 according to the present invention is as follows.
1.1 A battery cell including:
   a battery element;
   a lid member covering one end portion of the battery element in a predetermined direction; and
   an exterior film at least partially wrapped around the predetermined direction of the battery element, wherein
   the exterior film is rounded along the battery element in at least one corner of the battery element around the predetermined direction.
1.2 The battery cell according to 1.1, wherein
   a corner of the lid member aligned in the predetermined direction with the at least one corner of the battery element is rounded.
1.3 The battery cell according to 1.1 or 1.2, wherein
   a fold is provided in at least one corner of the exterior film around the predetermined direction of the battery element.
1.4 The battery cell according to any one of 1.1 to 1.3, further including
   another lid member covering another end portion of the battery element in the predetermined direction.

Aspect 2 according to the present invention is as follows.
2.1 A battery cell including:
   a battery element;
   a lid member covering an end portion of the battery element; and
   an exterior film including a wrapped portion wrapped around the battery element, and a drawn portion drawn from the wrapped portion, wherein
   at least a part of the wrapped portion and at least a part of the drawn portion are bonded to each other.
2.2 The battery cell according to 2.1, wherein
   a bonding portion between the wrapped portion and the drawn portion overlaps at least a part of a surface of the battery element facing in a predetermined direction.
2.3 The battery cell according to 2.1, wherein
   the battery element has a length in a predetermined first direction between the end portion and another end portion on a side opposite to the end portion, a width in a second direction orthogonal to the first direction, and a thickness, in a third direction orthogonal to the first direction and the second direction, shorter than the width, and
   a bonding portion between the wrapped portion and the drawn portion overlaps at least a part of a surface of the battery element substantially perpendicular to the third direction.
2.4 The battery cell according to 2.1, wherein
   the battery element has a length in a predetermined first direction between the end portion and another end portion on a side opposite to the end portion, a width in a second direction orthogonal to the first direction, and a thickness, in a third direction orthogonal to the first direction and the second direction, shorter than the width, and
   a bonding portion between the wrapped portion and the drawn portion overlaps at least a part of a surface of the battery element substantially perpendicular to the second direction.
2.5 The battery cell according to any one of 2.1 to 2.4, wherein
   a bonding portion between the wrapped portion and the drawn portion is located in any portion other than a lower portion around the battery element.

Aspect 3 according to the present invention is as follows.
3.1 A battery cell including:
   a battery element;
   a tab electrically connected to the battery element;
   a lid member covering an end portion of the battery element with the tab drawn from the lid member; and
   an exterior film at least partially wrapped around the battery element, wherein
   at least a part of the lid member covers at least a part of an end portion of the exterior film.
3.2 The battery cell according to 3.1, wherein
   at least a part of the lid member covers at least a part of an outer circumferential surface of the exterior film.
3.3 The battery cell according to 3.1 or 3.2, further including
   another lid member covering another end portion of the battery element on a side opposite to the end portion.

Aspect 4 according to the present invention is as follows.
4.1 A battery cell including:
   a battery element;
   a tab electrically connected to the battery element via a collection portion of a current collector drawn from the battery element;
   a lid member covering one end portion of the battery element with the tab drawn from the lid member; and
   an exterior film at least partially wrapped around the battery element, wherein
   a wrinkle of the exterior film is present around the collection portion of the current collector of the exterior film.
4.2 The battery cell according to 4.1, wherein,
   when viewed from a drawn direction of the tab, a size of the lid member is larger than a size of the battery element.
4.3 The battery cell according to 4.1, wherein,
   when viewed from a drawn direction of the tab, a size of the lid member is smaller than a size of the battery element.

Aspect 5 according to the present invention is as follows.
5.1 A battery cell including:
   a battery element;
   a lid member covering an end portion of the battery element in a longitudinal direction;
   an exterior film at least partially wrapped around the longitudinal direction of the battery element; and
   a reinforcing body provided along the longitudinal direction of the battery element.
5.2 The battery cell according to 5.1, wherein
   one end of the reinforcing body in the longitudinal direction is bonded to the lid member. 5.3 The battery cell according to 5.1 or 5.2, wherein
   at least a part of the reinforcing body includes a drawn portion of the exterior film having a plurality of folds.

According to aspect 1 of the present invention, a volume energy density of a battery cell can be improved.

According to aspect 2 of the present invention, protrusion of a sealing portion of an exterior film can be suppressed.

According to aspect 3 of the present invention, exposure of an end portion of an exterior film can be suppressed.

According to aspect 4 of the present invention, a characteristic of a battery cell can be stabilized.

According to aspect 5 of the present invention, strength of a battery cell in a longitudinal direction can be secured.

### BRIEF DESCRIPTION OF THE DRAWINGS

Fig. 1 is a front perspective view of a battery cell according to a first embodiment.
Fig. 2 is a front enlarged perspective view of a part of the battery cell according to the first embodiment.
Fig. 3 is a right side view of the battery cell according to the first embodiment.
Fig. 4 is a schematic cross-sectional view taken along an A-A line in Fig. 3.
Fig. 5 is a diagram illustrating a first example of a method of manufacturing a battery cell according to the first embodiment.
Fig. 6 is a diagram illustrating a second example of the method of manufacturing a battery cell according to the first embodiment.
Fig. 7 is a right side view of a battery cell according to a second embodiment.
Fig. 8 is a schematic cross-sectional view taken along a B-B line in Fig. 7.
Fig. 9 is a diagram illustrating one example of a method of manufacturing a battery cell according to the second embodiment.
Fig. 10 is a cross-sectional view of a battery cell according to a variant.
Fig. 11 is a front perspective view of a battery cell according to a third embodiment.
Fig. 12 is a front enlarged perspective view of a part of the battery cell according to the third embodiment.
Fig. 13 is a right side view of the battery cell according to the third embodiment.
Fig. 14 is a schematic cross-sectional view taken along a C-C line in Fig. 12.
Fig. 15 is a diagram illustrating a variant of Fig. 14.
Fig. 16 is a front perspective view of a battery cell according to a fourth embodiment.
Fig. 17 is a front enlarged perspective view of a part of the battery cell according to the fourth embodiment.
Fig. 18 is a right side view of the battery cell according to the fourth embodiment.
Fig. 19 is a schematic cross-sectional view taken along a D-D line in Fig. 18.
Fig. 20 is a diagram illustrating a first example of a method of manufacturing a battery cell according to the fourth embodiment.
Fig. 21 is a diagram illustrating a second example of the method of manufacturing a battery cell according to the fourth embodiment.
Fig. 22 is a front perspective view of a battery cell according to a variant.
Fig. 23 is a front perspective view of a battery cell according to a fifth embodiment.
Fig. 24 is a front enlarged perspective view of a part of the battery cell according to the fifth embodiment.
Fig. 25 is a right side view of the battery cell according to the fifth embodiment.
Fig. 26 is a diagram illustrating a battery cell according to a variant.

### EMBODIMENT

### (First Embodiment)

Hereinafter, a first embodiment of the present invention will be described by using drawings. In all of the drawings, a similar component has a similar reference sign, and description thereof will be appropriately omitted.

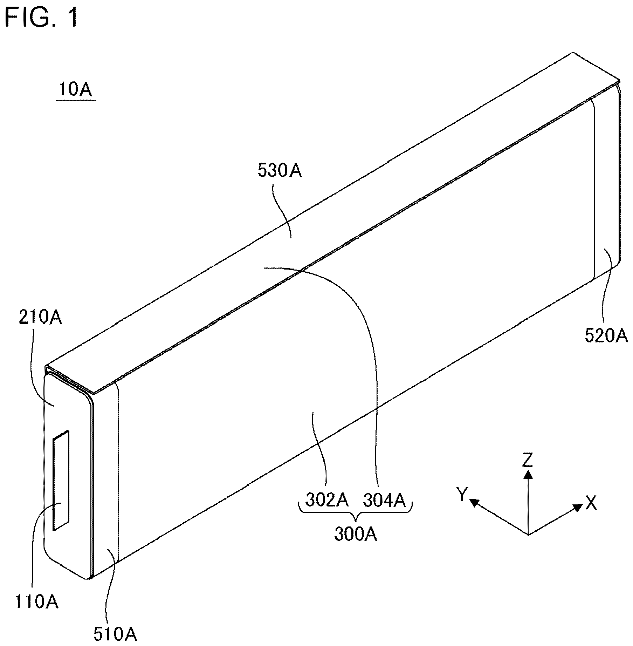

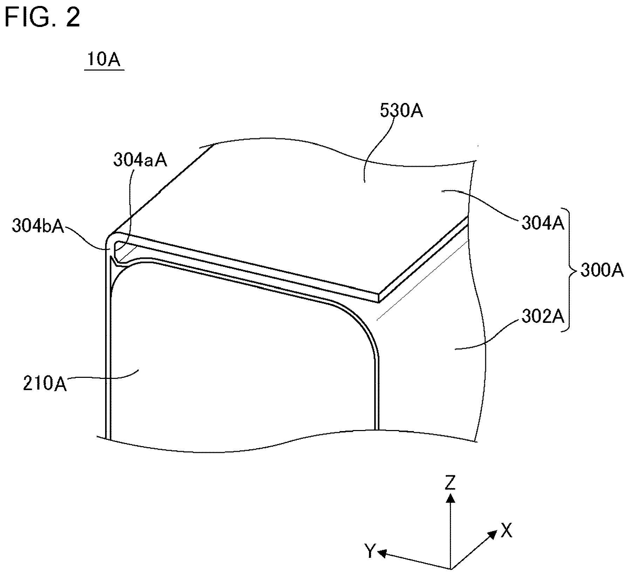

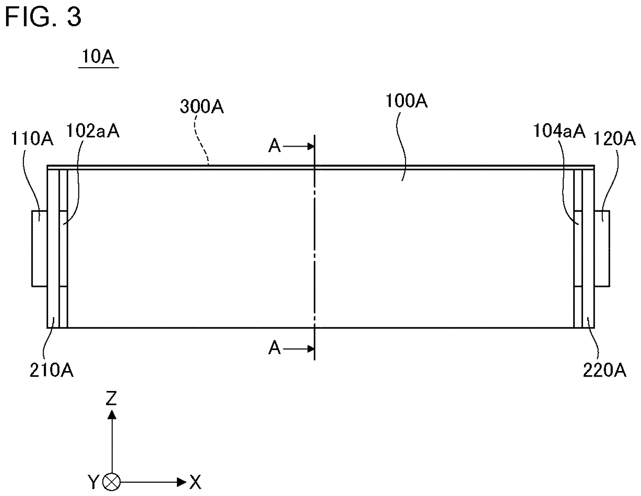

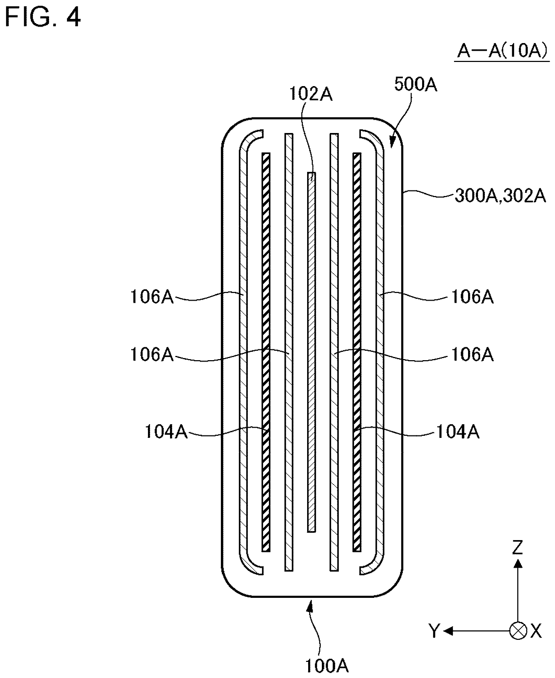

Fig. 1 is a front perspective view of a battery cell 10A according to the first embodiment. Fig. 2 is a front enlarged perspective view of a part of the battery cell 10A according to the first embodiment. Fig. 3 is a right side view of the battery cell 10A according to the first embodiment. Fig. 4 is a schematic cross-sectional view taken along an A-A line in Fig. 3. In Fig. 3, an exterior film 300A is illustrated to be transparent for description. Fig. 4 does not illustrate a drawn portion 304A described below.

In each drawing, an X direction, a Y direction, and a Z direction are provided for description. The X direction indicates a front-rear direction of the battery cell 10A. The Y direction is orthogonal to the X direction. The Y direction indicates a left-right direction of the battery cell 10A. The Z direction is orthogonal to both of the X direction and the Y direction. The Z direction indicates an up-down direction of the battery cell 10A. A direction pointed by an arrow indicating the X direction, a direction pointed by an arrow indicating the Y direction, and a direction pointed by an arrow indicating the Z direction are a rear direction, a left direction, and an upward direction, respectively. However, a relationship among the X direction, the Y direction, the Z direction, the front-rear direction, the left-right direction, and the up-down direction of the battery cell 10A is not limited to this example.

A white circle with an X indicating the X direction, the Y direction, or the Z direction indicates that a direction from the front to the back of the paper plane is a direction pointed by an arrow indicating the direction.

The battery cell 10A includes a battery element 100A, a positive electrode tab 110A, a negative electrode tab 120A, a front lid member 210A, a rear lid member 220A, and the exterior film 300A. The exterior film 300A includes a wrapped portion 302A and the drawn portion 304A.

The battery element 100A has an approximate rectangular cuboid shape. A longitudinal direction of the battery element 100A is substantially parallel to the X direction. A length of the battery element 100A in the X direction may be, for example, but is not limited to, equal to or more than 300 mm and equal to or less than 500 mm, preferably, equal to or less than 450 mm. A transverse direction of the battery element 100A is substantially parallel to the Z direction. A length of the battery element 100A in the Z direction may be, for example, but is not limited to, equal to or more than 90 mm and equal to or less than 130 mm, preferably, equal to or less than 120 mm. A thickness direction of the battery element 100A is substantially parallel to the Y direction. A thickness of the battery element 100A in the Y direction may be, for example, but is not limited to, equal to or more than 20 mm and equal to or less than 50 mm, preferably, equal to or less than 45 mm. However, a shape of the battery element 100A is not limited to this example.

As illustrated in Fig. 4, the battery element 100A includes at least one positive electrode 102A, at least one negative electrode 104A, and at least one separator 106A. In the example illustrated in Fig. 4, the battery element 100A schematically includes one positive electrode 102A, two negative electrodes 104A, and four separators 106A. However, the number of the positive electrodes 102A, the number of the negative electrodes 104A, and the number of the separators 106A are not limited to the example illustrated in Fig. 4.

The positive electrode 102A and the negative electrode 104A are alternately staked in the Y direction. An area of the negative electrode 104A in a direction perpendicular to the Y direction is greater than an area of the positive electrode 102A in the direction perpendicular to the Y direction. In the example illustrated in Fig. 4, a length of the negative electrode 104A in the Z direction is longer than a length of the positive electrode 102A in the Z direction.

The separator 106A is located between the positive electrode 102A and the negative electrode 104A adjacent to each other in the Y direction except for the separator 106A located at both ends of the battery element 100A in Y direction. In the example illustrated in Fig. 4, one separator 106A is located on the left side of the negative electrode 104A located in a leftmost position. Another separator 106A is located on the right side of the negative electrode 104A located in a rightmost position. An area of the separator 106A in the direction perpendicular to the Y direction is greater than an area of the negative electrode 104A in the direction perpendicular to the Y direction. In the example illustrated in Fig. 4, a length of the separator 106A in the Z direction is longer than a length of the negative electrode 104A in the Z direction.

As illustrated in Fig. 3, the positive electrode tab 110A is disposed on the front of the battery element 100A. A rear end portion of the positive electrode tab 110A is electrically connected to a positive electrode current collector 102aA. The positive electrode current collector 102aA is drawn from the positive electrode 102A to the front. In this way, the positive electrode tab 110A is electrically connected to the plurality of positive electrodes 102A.

As illustrated in Fig. 3, the negative electrode tab 120A is disposed on the rear of the battery element 100A. A front end portion of the negative electrode tab 120A is electrically connected to a negative electrode current collector 104aA. The negative electrode current collector 104aA is drawn from the negative electrode 104A to the rear. In this way, the negative electrode tab 120A is electrically connected to the plurality of negative electrodes 104A.

The front lid member 210A covers a front end portion of the battery element 100A. The front lid member 210A is formed of, for example, resin, metal, or the like. A front end portion of the positive electrode tab 110A protrudes from a front surface of the front lid member 210A. When viewed from the front, the front lid member 210A has a substantially rectangular shape with four rounded corners around the X direction. When viewed from the front, a longitudinal direction of the front lid member 210A is substantially parallel to the Z direction, and a transverse direction of the front lid member 210A is substantially parallel to the Y direction. The four corners around the X direction of the front lid member 210A are aligned in the X direction with four corners around the X direction of the battery element 100A.

The rear lid member 220A covers a rear end portion of the battery element 100A. The rear lid member 220A is formed of, for example, resin, metal, or the like. A rear end portion of the negative electrode tab 120A protrudes from a rear surface of the rear lid member 220A. When viewed from the rear, the rear lid member 220A has a substantially rectangular shape with four rounded corners around the X direction. When viewed from the rear, a longitudinal direction of the rear lid member 220A is substantially parallel to the Z direction, and a transverse direction of the rear lid member 220A is substantially parallel to the Y direction. The four corners around the X direction of the rear lid member 220A are aligned in the X direction with four corners around the X direction of the battery element 100A.

As illustrated in Figs. 1 and 2, the wrapped portion 302A has a substantially tubular shape open toward both of the front and the rear. The front lid member 210A is disposed inside the front opening of the wrapped portion 302A. The rear lid member 220A is disposed inside the rear opening of the wrapped portion 302A. The wrapped portion 302A is wrapped one revolution around the X direction of the battery element 100A, the front lid member 210A, and the rear lid member 220A. In this way, as illustrated in Fig. 4, the front lid member 210A, the rear lid member 220A, and the wrapped portion 302A form a housing space 500A that houses the battery element 100A. An unillustrated electrolytic solution is housed together with the battery element 100A in the housing space 500A. A state of wrapping of the wrapped portion 302A around the battery element 100A is not limited to the example described above.

An outer circumferential surface of the front lid member 210A around the X direction and an inner circumferential surface of the front opening of the wrapped portion 302A around the X direction are bonded to each other by thermal bonding, for example. In this way, a front sealing portion 510A is formed on the front of the housing space 500A.

An outer circumferential surface of the rear lid member 220A around the X direction and an inner circumferential surface of the rear opening of the wrapped portion 302A around the X direction are bonded to each other by thermal bonding, for example. In this way, a rear sealing portion 520A is formed on the rear of the housing space 500A.

As illustrated in Figs. 1 and 2, when viewed from the front, the drawn portion 304A is drawn from a corner of the wrapped portion 302A on an upper left side of the battery element 100A.
Specifically, as illustrated in Fig. 2, the drawn portion 304A includes a first drawn portion 304aA and a second drawn portion 304bA. The first drawn portion 304aA is drawn from one of both ends of the wrapped portion 302A in a circumferential direction around the X direction. The second drawn portion 304bA is drawn from the other of both ends of the wrapped portion 302A in the circumferential direction around the X direction. The first drawn portion 304aA and the second drawn portion 304bA are bonded to each other by thermal bonding, for example. In this way, when viewed from the front, a lateral sealing portion 530A is formed on an upper left side of the housing space 500A. The drawn portion 304A is folded along an upper surface of the battery element 100A. However, the drawn portion 304A may not be folded. A shape of the fold of the drawn portion 304A is not limited to the shape according to the first embodiment.

As illustrated in Fig. 4, the wrapped portion 302A is rounded along the battery element 100A in at least one corner of the battery element 100A around the X direction. Specifically, both end portions in the Z direction of the separators 106A located at both ends of the battery element 100A in the Y direction are curved toward the center in the Y direction of the battery element 100A. The wrapped portion 302A is wrapped along the curve of the both end portions of the separators 106A in the Z direction at the four corners around the X direction of the battery element 100A. For example, consider a case where the both end portions in the Z direction of the separators 106A located at the both ends of the battery element 100A in the Y direction are not curved toward the center in the Y direction of the battery element 100A and are substantially parallel to the Z direction. Alternatively, consider a case where the four corners of the wrapped portion 302A around the X direction of the battery element 100A are not wrapped along the curve of the both end portions in the Z direction of the separators 106A and have a substantially right angle. As compared to these cases, volume of the battery cell 10A can be reduced in the first embodiment. Accordingly, as compared to the cases described above, a volume energy density of the battery cell 10A can be improved in the first embodiment.

As illustrated in Figs. 1 and 2, in the first embodiment, four corners of the front lid member 210A aligned in the X direction with the four corners around the X direction of the battery element 100A are rounded. Thus, the wrapped portion 302A can be more easily rounded in the four corners around the X direction of the battery element 100A than when the four corners of the front lid member 210A are not rounded. Similarly, four corners of the rear lid member 220A aligned in the X direction with the four corners around the X direction of the battery element 100A are rounded. Thus, the wrapped portion 302A can be more easily rounded in the four corners around the X direction of the battery element 100A than when the four corners of the rear lid member 220A are not rounded.

The above-described four corners of the front lid member 210A may not all be rounded. Alternatively, only some of the above-described four corners of the front lid member 210A may be rounded. Similarly, the above-described four corners of the rear lid member 220A may not all be rounded. Alternatively, only some of the above-described four corners of the rear lid member 220A may be rounded.

A curvature radius of the roundness of the wrapped portion 302A in a corner on the upper left side of the battery element 100A when viewed from the front, i.e., a corner from which the drawn portion 304A around the X direction of the battery element 100A is drawn may be smaller than a curvature radius of the roundness of the wrapped portion 302A in three remaining corners around the X direction of the battery element 100A. This is because the corner from which the drawn portion 304A around the X direction of the battery element 100A is drawn is an origin of a bonding portion between the first drawn portion 304aA and the second drawn portion 304bA. In other words, the wrapped portion 302A is less likely to be rounded along the battery element 100A in the corner from which the drawn portion 304A around the X direction of the battery element 100A is drawn than in the three remaining corners around the X direction of the battery element 100A. A curvature radius of the roundness of the rounded wrapped portion 302A in the corner from which the drawn portion 304A around the X direction of the battery element 100A is drawn can be adjusted by, for example, a shape of a corner of at least one of the front lid member 210A and the rear lid member 220A.

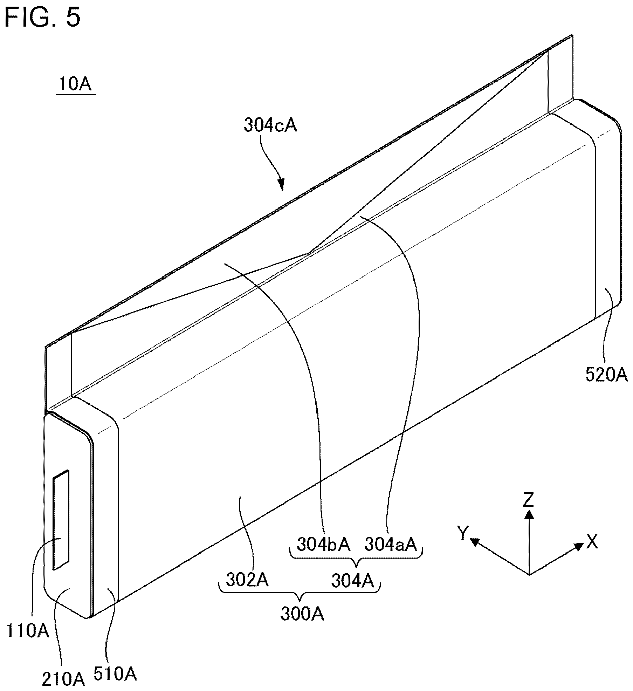

Fig. 5 is a diagram illustrating a first example of a method of manufacturing the battery cell 10A according to the first embodiment. In this first example, the battery cell 10A is manufactured as follows.

First, the battery element 100A is manufactured. The battery element 100A includes at least one positive electrode 102A, at least one negative electrode 104A, and at least one separator 106A.

Next, the positive electrode tab 110A and the front lid member 210A are bonded to each other. Similarly, the negative electrode tab 120A and the rear lid member 220A are bonded to each other. Next, the positive electrode tab 110A and the positive electrode current collector 102aA are bonded to each other. Similarly, the negative electrode tab 120A and the negative electrode current collector 104aA are bonded to each other. However, after the positive electrode tab 110A and the positive electrode current collector 102aA are bonded to each other, the positive electrode tab 110A and the front lid member 210A may be bonded to each other. Similarly, after the negative electrode tab 120A and the negative electrode current collector 104aA are bonded to each other, the negative electrode tab 120A and the rear lid member 220A may be bonded to each other.

Next, the exterior film 300A is wrapped one revolution around the X direction of the battery element 100A, the front lid member 210A, and the rear lid member 220A. In this way, the wrapped portion 302A is formed around the X direction of the battery element 100A, the front lid member 210A, and the rear lid member 220A. When viewed from the front, an extra length of the exterior film 300A is drawn, as the drawn portion 304A, from the corner on the upper left side of the battery element 100A, the front lid member 210A, and the rear lid member 220A.

Next, the outer circumferential surface of the front lid member 210A around the X direction and the inner circumferential surface of the front opening of the wrapped portion 302A around the X direction are bonded to each other by thermal bonding. In this way, the front sealing portion 510A is formed. Next, the outer circumferential surface of the rear lid member 220A around the X direction and the inner circumferential surface of the rear opening of the wrapped portion 302A around the X direction are bonded to each other by thermal bonding. In this way, the rear sealing portion 520A is formed. In the example illustrated in Fig. 5, the front sealing portion 510A is also formed on a front end portion of the drawn portion 304A. The rear sealing portion 520A is also formed on a rear end portion of the drawn portion 304A. In this way, the first drawn portion 304aA and the second drawn portion 304bA form a solution injection opening 304cA. The solution injection opening 304cA is opened upward. The housing space 500A communicates with an external space via the solution injection opening 304cA. Next, an electrolytic solution is injected into the housing space 500A via the solution injection opening 304cA.

Next, the housing space 500A is vacuum-sealed. Specifically, after a vacuum is drawn from the housing space 500A via the solution injection opening 304cA, the lateral sealing portion 530A is formed by bonding the first drawn portion 304aA and the second drawn portion 304bA to each other by thermal bonding.

Drawing the vacuum from the housing space 500A results in the battery element 100A compressed by the wrapped portion 302A. Accordingly, the wrapped portion 302A can be strongly wrapped around the battery element 100A by drawing the vacuum from the housing space 500A. Thus, as illustrated in Fig. 4, the both end portions in the Z direction of the separators 106A located at the both ends of the battery element 100A in the Y direction are curved toward the center in the Y direction of the battery element 100A. Accordingly, the wrapped portion 302A is rounded along the curve of the both end portions of the separators 106A in the Z direction at the four corners around the X direction of the battery element 100A. Thus, volume of the battery cell 10A can be reduced. Accordingly, a volume energy density of the battery cell 10A can be improved.

Next, the drawn portion 304A is folded along the upper surface of the battery element 100A.

In this way, the battery cell 10A is manufactured.

A method of manufacturing the battery cell 10A is not limited to the above-described example. For example, before the exterior film 300A is wrapped one revolution around the X direction of the battery element 100A, a fold along at least one of the four corners around the X direction of the battery element 100A may be formed in advance in the exterior film 300A. For example, a fold may be provided in advance in an origin or a corner in the vicinity of the origin of wrapping of the exterior film 300A. This fold can facilitate wrapping the exterior film 300A around the X direction of the battery element 100A.

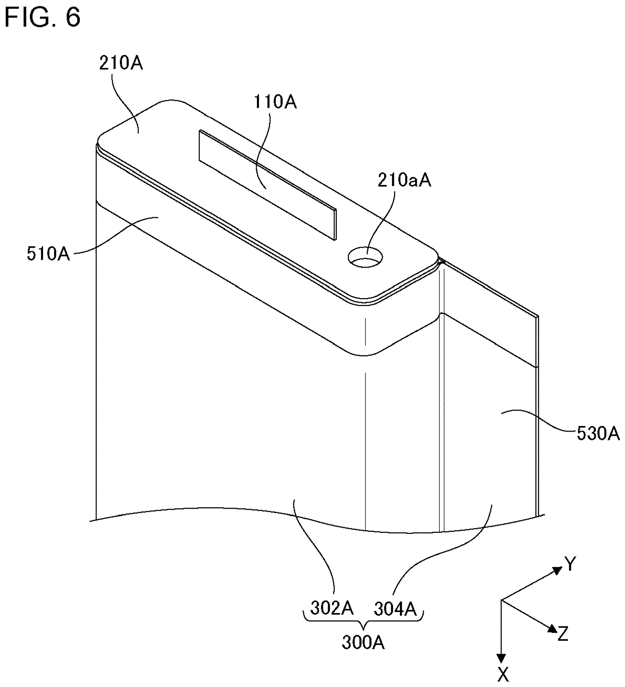

Fig. 6 is a diagram illustrating a second example of the method of manufacturing the battery cell 10A according to the first embodiment. This second example is similar to the first example described above except for the following points.

First, similarly to the first example, the battery element 100A is manufactured. Next, similarly to the first example, the positive electrode tab 110A and the front lid member 210A are bonded to each other. The negative electrode tab 120A and the rear lid member 220A are bonded to each other. Next, similarly to the first example, the positive electrode tab 110A and the positive electrode current collector 102aA are bonded to each other. The negative electrode tab 120A and the negative electrode current collector 104aA are bonded to each other. In the second example, as illustrated in Fig. 6, a solution injection hole 210aA is formed in the front surface of the front lid member 210A. The housing space 500A communicates with an external space via the solution injection hole 210aA.

Next, the exterior film 300A is wrapped around the X direction of the battery element 100A, the front lid member 210A, and the rear lid member 220A to form the wrapped portion 302A and the drawn portion 304A. Next, the outer circumferential surface of the front lid member 210A around the X direction and the inner circumferential surface of the front opening of the wrapped portion 302A around the X direction are bonded to each other by thermal bonding. In this way, the front sealing portion 510A is formed. Next, the outer circumferential surface of the rear lid member 220A around the X direction and the inner circumferential surface of the rear opening of the wrapped portion 302A around the X direction are bonded to each other by thermal bonding. In this way, the rear sealing portion 520A is formed. Next, the first drawn portion 304aA and the second drawn portion 304bA are bonded to each other by thermal bonding. In this way, the lateral sealing portion 530A is formed.

Next, an electrolytic solution is injected into the housing space 500A via the solution injection hole 210aA. Next, the housing space 500A is vacuum-sealed. Specifically, after a vacuum is drawn from the housing space 500A via the solution injection hole 210aA, the solution injection hole 210aA is covered by a predetermined lid component. Similarly to the first example, drawing the vacuum from the housing space 500A results in the wrapped portion 302A rounded along the battery element 100A in at least one corner of the battery element 100A around the X direction. Thus, volume of the battery cell 10A can be reduced. Therefore, a volume energy density of the battery cell 10A can be improved.

Next, similarly to the first example, the drawn portion 304A is folded along the upper surface of the battery element 100A.

In this way, the battery cell 10A is manufactured.

While the first embodiment of the present invention has been described with reference to the drawings, the embodiment are only exemplification of the present invention, and various configurations other than the above may be employed.

For example, in the first embodiment, the positive electrode tab 110A and the negative electrode tab 120A are disposed on opposite sides to each other in the X direction of the battery element 100A. However, both of the positive electrode tab 110A and the negative electrode tab 120A may be disposed on only one of a front side and a rear side in the X direction of the battery element 100A. In this case, for example, two lid members cover the front end portion and the rear end portion of the battery element 100A. Alternatively, a lid member may cover only a side of the battery element 100A from which the positive electrode tab 110A and the negative electrode tab 120A are drawn. In this example, the exterior film 300A may be sealed and folded along the battery element 100A on an opposite side to the lid member of the battery element 100A.

### (Second Embodiment)

Hereinafter, a second embodiment and variants of the present invention will be described by using drawings. In all of the drawings, a similar component has a similar reference sign, and description thereof will be appropriately omitted.

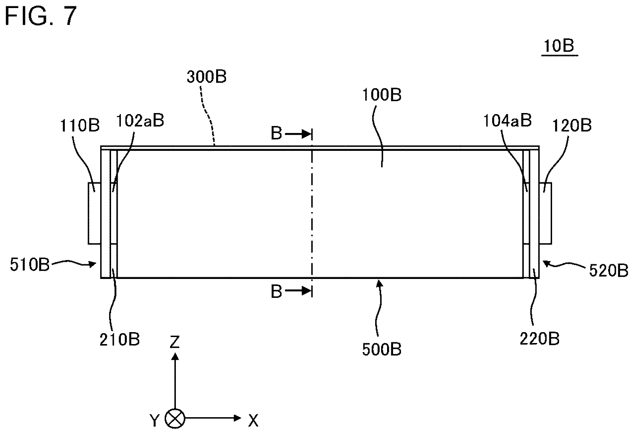

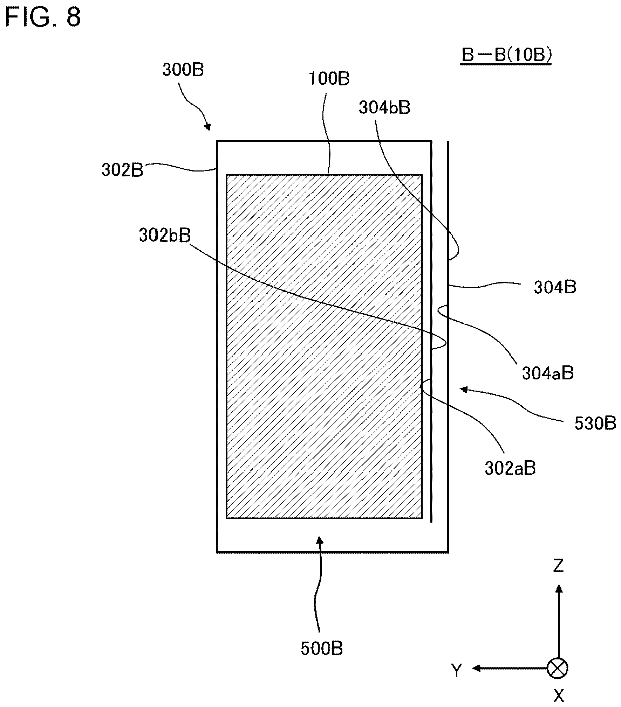

Fig. 7 is a right side view of a battery cell 10B according to the second embodiment. Fig. 8 is a schematic cross-sectional view taken along a B-B line in Fig. 7. In Fig. 7, an exterior film 300B is illustrated to be transparent for description.

In each drawing, an X direction, a Y direction, and a Z direction are provided for description. The X direction indicates a front-rear direction of the battery cell 10B. The Y direction is orthogonal to the X direction. The Y direction indicates a left-right direction of the battery cell 10B. The Z direction is orthogonal to both of the X direction and the Y direction. The Z direction indicates an up-down direction of the battery cell 10B. A direction pointed by an arrow indicating the X direction, a direction pointed by an arrow indicating the Y direction, and a direction pointed by an arrow indicating the Z direction are a rear direction, a left direction, and an upward direction, respectively. However, a relationship among the X direction, the Y direction, the Z direction, the front-rear direction, the left-right direction, and the up-down direction of the battery cell 10B is not limited to this example.

A white circle with an X indicating the X direction, the Y direction, or the Z direction indicates that a direction from the front to the back of the paper plane is a direction pointed by an arrow indicating the direction.

The battery cell 10B includes a battery element 100B, a positive electrode tab 110B, a negative electrode tab 120B, a front lid member 210B, a rear lid member 220B, and the exterior film 300B. The exterior film 300B includes a wrapped portion 302B and a drawn portion 304B.

The battery element 100B has an approximate rectangular cuboid shape. A longitudinal direction of the battery element 100B is substantially parallel to the X direction. A length of the battery element 100B in the X direction may be, for example, but is not limited to, equal to or more than 300 mm and equal to or less than 500 mm, preferably, equal to or less than 450 mm. A transverse direction of the battery element 100B is substantially parallel to the Z direction. A width of the battery element 100B in the Z direction may be, for example, but is not limited to, equal to or more than 90 mm and equal to or less than 130 mm, preferably, equal to or less than 120 mm. A thickness direction of the battery element 100B is substantially parallel to the Y direction. A thickness of the battery element 100B in the Y direction may be, for example, but is not limited to, equal to or more than 20 mm and equal to or less than 50 mm, preferably, equal to or less than 45 mm. However, a shape of the battery element 100B is not limited to this example.

The battery element 100B includes at least one unillustrated positive electrode, at least one unillustrated negative electrode, and at least one unillustrated separator. For example, a plurality of the positive electrodes and a plurality of the negative electrodes are alternately stacked in the Y direction. At least a part of the separator is located between the positive electrode and the negative electrode adjacent to each other in the Y direction. For example, each of a plurality of sheet-shaped separators may be located between the positive electrode and the negative electrode adjacent to each other in the Y direction. Alternatively, one sheet-shaped separator may have a fanfold shape through a region between the positive electrode and the negative electrode adjacent to each other in the Y direction. Alternatively, the positive electrode, the negative electrode, and the separator may be wound with the separator located between the positive electrode and the negative electrode. In one example, the positive electrode, the negative electrode, and the separator are wound with both sides of one of the positive electrode and the negative electrode covered by the separator. In another example, a stacked body including a plurality of unit stacked bodies including the positive electrode, the separator, and the negative electrode in this order may be wound. However, a winding structure of the positive electrode, the negative electrode, and the separator is not limited to these examples.

The positive electrode tab 110B is disposed on the front of the battery element 100B. A rear end portion of the positive electrode tab 110B is electrically connected to a positive electrode current collector 102aB. The positive electrode current collector 102aB is drawn from the positive electrode of the battery element 100B to the front. In this way, the positive electrode tab 110B is electrically connected to the positive electrode of the battery element 100B.

The negative electrode tab 120B is disposed on the rear of the battery element 100B. A front end portion of the negative electrode tab 120B is electrically connected to a negative electrode current collector 104aB. The negative electrode current collector 104aB is drawn from the negative electrode of the battery element 100B to the rear. In this way, the negative electrode tab 120B is electrically connected to the negative electrode of the battery element 100B.

The front lid member 210B covers a front end portion of the battery element 100B. The front lid member 210B is formed of, for example, resin, metal, or the like. A front end portion of the positive electrode tab 110B protrudes from a front surface of the front lid member 210B. When viewed from the front, the front lid member 210B has a substantially rectangular shape. When viewed from the front, a longitudinal direction of the front lid member 210B is substantially parallel to the Z direction, and a transverse direction of the front lid member 210B is substantially parallel to the Y direction.

The rear lid member 220B covers a rear end portion of the battery element 100B. The rear lid member 220B is formed of, for example, resin, metal, or the like. A rear end portion of the negative electrode tab 120B protrudes from a rear surface of the rear lid member 220B. When viewed from the rear, the rear lid member 220B has a substantially rectangular shape. When viewed from the rear, a longitudinal direction of the rear lid member 220B is substantially parallel to the Z direction, and a transverse direction of the rear lid member 220B is substantially parallel to the Y direction.

The wrapped portion 302B has a substantially tubular shape open toward both of the front and the rear. In this way, the wrapped portion 302B includes an inner circumferential surface 302aB and an outer circumferential surface 302bB. The inner circumferential surface 302aB is located inside the exterior film 300B around the X direction of the battery element 100B. The outer circumferential surface 302bB is located outside the exterior film 300B around the X direction of the battery element 100B.

The front lid member 210B is disposed inside the front opening of the wrapped portion 302B. The rear lid member 220B is disposed inside the rear opening of the wrapped portion 302B. The wrapped portion 302B is wrapped one revolution around the X direction of the battery element 100B, the front lid member 210B, and the rear lid member 220B. In this way, the front lid member 210B, the rear lid member 220B, and the wrapped portion 302B form a housing space 500B that houses the battery element 100B. An unillustrated electrolytic solution is housed together with the battery element 100B in the housing space 500B.

An outer circumferential surface of the front lid member 210B around the X direction and the inner circumferential surface 302aB of the front opening of the wrapped portion 302B around the X direction are bonded to each other by thermal bonding, for example. In this way, a front sealing portion 510B is formed on the front of the battery element 100B.

An outer circumferential surface of the rear lid member 220B around the X direction and the inner circumferential surface 302aB of the rear opening of the wrapped portion 302B around the X direction are bonded to each other by thermal bonding, for example. In this way, a rear sealing portion 520B is formed on the rear of the battery element 100B.

As illustrated in Fig. 8, when viewed from the front, the drawn portion 304B is drawn from one end of the wrapped portion 302B located in a lower right corner of the battery element 100B. The drawn portion 304B is folded along a right side surface of the battery element 100B. In this way, the drawn portion 304B includes an inner surface 304aB and an outer surface 304bB. The inner surface 304aB is located on a side on which the battery element 100B is located. The outer surface 304bB is located on an opposite side to the side on which the battery element 100B is located. On a right side surface side of the battery element 100B, the outer circumferential surface 302bB of the wrapped portion 302B and the inner surface 304aB of the drawn portion 304B are bonded to each other by thermal bonding, for example. In this way, a lateral sealing portion 530B is formed on the right of the battery element 100B. In other words, the lateral sealing portion 530B includes a bonding portion between the wrapped portion 302B and the drawn portion 304B. The lateral sealing portion 530B is formed along the right side surface of the battery element 100B. Accordingly, protrusion of the lateral sealing portion 530B can be suppressed without folding the lateral sealing portion 530B.

The inner circumferential surface and the outer circumferential surface of the exterior film 300B around the X direction of the battery element 100B may be formed of a thermoplastic resin such as a polypropylene (PP) resin, for example. In this example, the outer circumferential surface 302bB of the wrapped portion 302B and the inner surface 304aB of the drawn portion 304B can be formed of a thermoplastic resin. Accordingly, the outer circumferential surface 302bB of the wrapped portion 302B and the inner surface 304aB of the drawn portion 304B can be easily bonded to each other by thermal bonding.

In the second embodiment, a thickness of the battery element 100B in the Y direction is shorter than a width of the battery element 100B in the Z direction. In this case, side surfaces on both sides in the Y direction of the battery element 100B can be flatter than side surfaces on both sides in the Z direction of the battery element 100B. For example, when the plurality of positive electrodes, the plurality of negative electrodes, and the plurality of separators are stacked in the thickness direction of the battery element 100B, an end portion of each of the positive electrodes, each of the negative electrodes, and each of the separators is located on side surfaces on both sides in the width direction of the battery element 100B. Alternatively, when the separator has a fanfold shape through a region between the positive electrode and the negative electrode alternately stacked in the thickness direction of the battery element 100B, a fold of the separator is present on the side surfaces on the both sides in the width direction of the battery element 100B. Alternatively, when the positive electrode, the negative electrode, and the separator are wound, a fold of the positive electrode, the negative electrode, and the separator is present on the side surfaces on the both sides in the width direction of the battery element 100B. In any of the structures of the battery element 100B, the side surfaces on the both sides in the Y direction of the battery element 100B can be therefore flatter than the side surfaces on the both sides in the Z direction of the battery element 100B. In the second embodiment, the lateral sealing portion 530B overlaps at least a part of a surface of the battery element 100B substantially perpendicular to the Y direction. Specifically, the lateral sealing portion 530B overlaps at least a part of a surface of the battery element 100B facing in the right direction. The lateral sealing portion 530B can be therefore disposed along a relatively flat surface of the battery element 100B. Thus, the lateral sealing portion 530B can be more easily formed than when the lateral sealing portion 530B overlaps a surface of the battery element 100B substantially perpendicular to the Z direction.

In one example, a plurality of the battery cells 10B may be stacked in the Y direction to form a battery module. In this example, a lower surface of each of the battery cells 10B is desirably flat. In the second embodiment, the lateral sealing portion 530B is located on the lateral side of the battery element 100B, and is not located below the battery element 100B. Thus, the lower surface of the battery cell 10B can be more flat than when the lateral sealing portion 530B is located below the battery element 100B. A position in which the lateral sealing portion 530B is provided is not limited to the position according to the second embodiment. For example, the lateral sealing portion 530B may be located above the battery element 100B. In other words, the lateral sealing portion 530B can be located on any portion other than a lower portion around the X direction of the battery element 100B.

In the example illustrated in Fig. 8, a length of the drawn portion 304B in the Z direction is substantially equal to a width of the battery element 100B in the Z direction. In other words, the lateral sealing portion 530B overlaps the substantially entire right side surface of the battery element 100B. However, a length of the drawn portion 304B in the Z direction may be shorter than a width of the battery element 100B in the Z direction. For example, a length of the drawn portion 304B in the Z direction may be equal to or less than 50 % of a width of the battery element 100B in the Z direction. In other words, the lateral sealing portion 530B may overlap only a part of the right side surface of the battery element 100B.

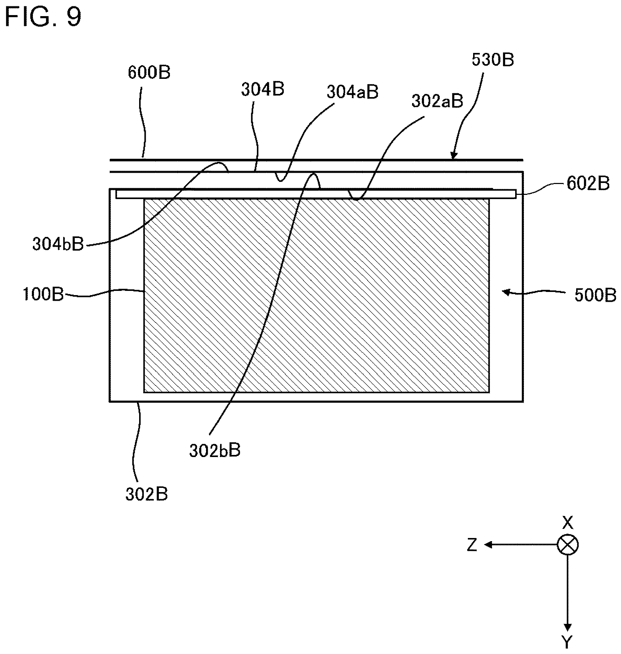

Fig. 9 is a diagram illustrating one example of a method of manufacturing the battery cell 10B according to the second embodiment. In Fig. 9, a direction pointed by an arrow indicating the Y direction and a direction pointed by an arrow indicating the Z direction are a downward direction and a left direction, respectively. In this example, the battery cell 10B is manufactured as follows.

First, the battery element 100B is manufactured. The battery element 100B includes at least one positive electrode, at least one negative electrode, and at least one separator.

Next, the positive electrode tab 110B and the front lid member 210B are bonded to each other. Similarly, the negative electrode tab 120B and the rear lid member 220B are bonded to each other. Next, the positive electrode tab 110B and the positive electrode current collector 102aB are bonded to each other. Similarly, the negative electrode tab 120B and the negative electrode current collector 104aB are bonded to each other. However, after the positive electrode tab 110B and the positive electrode current collector 102aB are bonded to each other, the positive electrode tab 110B and the front lid member 210B may be bonded to each other. Similarly, after the negative electrode tab 120B and the negative electrode current collector 104aB are bonded to each other, the negative electrode tab 120B and the rear lid member 220B may be bonded to each other.

Next, the exterior film 300B is wrapped one revolution around the X direction of the battery element 100B. In this way, the wrapped portion 302B is formed. An extra length of the exterior film 300B is drawn as the drawn portion 304B. In the example illustrated in Fig. 9, when viewed from the front, the drawn portion 304B is drawn from one end of the wrapped portion 302B located in an upper right corner of the battery element 100B around the X direction. The outer circumferential surface 302bB of the wrapped portion 302B and the inner surface 304aB of the drawn portion 304B face each other above the battery element 100B.

Next, as illustrated in Fig. 9, a base material 602B is disposed between the upper surface of the battery element 100B and the inner circumferential surface 302aB of the wrapped portion 302B. The base material 602B is, for example, a board having relatively high hardness. The wrapped portion 302B and the drawn portion 304B are heat-pressed in the Y direction by a heat press 600 from above the drawn portion 304B with the base material 602B disposed between the upper surface of the battery element 100B and the inner circumferential surface 302aB of the wrapped portion 302B. In this way, the outer circumferential surface 302bB of the wrapped portion 302B and the inner surface 304aB of the drawn portion 304B are bonded to each other by thermal bonding. In this way, the lateral sealing portion 530B is formed. Next, the base material 602B is removed from the housing space 500B.

Next, the outer circumferential surface of the front lid member 210B around the X direction and the inner circumferential surface 302aB of the front opening of the wrapped portion 302B around the X direction are bonded to each other by thermal bonding. In this way, the front sealing portion 510B is formed. Next, the outer circumferential surface of the rear lid member 220B around the X direction and the inner circumferential surface 302aB of the rear opening of the wrapped portion 302B around the X direction are bonded to each other by thermal bonding. In this way, the rear sealing portion 520B is formed.

Next, an electrolytic solution is injected into the housing space 500B. For example, the electrolytic solution is injected via a solution injection hole provided in at least one of the front lid member 210B and the rear lid member 220B. Next, the housing space 500B is vacuum-sealed. For example, a vacuum is drawn from the housing space 500B via the solution injection hole. In this example, after the housing space 500B is vacuum-sealed, the solution injection hole is covered by a predetermined lid member.

In this way, the battery cell 10B is manufactured.

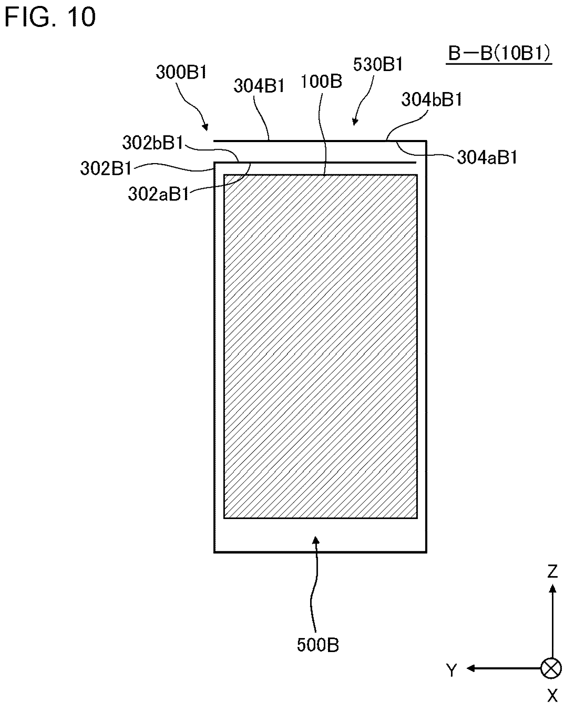

Fig. 10 is a cross-sectional view of a battery cell 10B1 according to a variant. The battery cell 10B1 according to the variant is similar to the battery cell 10B according to the second embodiment except for the following points.

An exterior film 300B1 according to the variant includes a wrapped portion 302B1 and a drawn portion 304B1. The wrapped portion 302B1 includes an inner circumferential surface 302aB1 and an outer circumferential surface 302bB1. The drawn portion 304B1 includes an inner surface 304aB1 and an outer surface 304bB1.

As illustrated in Fig. 10, when viewed from the front, the drawn portion 304B1 is drawn from one end of the wrapped portion 302B1 located in an upper right corner of a battery element 100B. The drawn portion 304B1 is folded along an upper side surface of the battery element 100B. On an upper side surface side of the battery element 100B, the outer circumferential surface 302bB1 of the wrapped portion 302B1 and the inner surface 304aB1 of the drawn portion 304B1 are bonded to each other by thermal bonding, for example. In this way, a lateral sealing portion 530B1 is formed above the battery element 100B. In other words, the lateral sealing portion 530B1 includes a bonding portion between the wrapped portion 302B1 and the drawn portion 304B1. The lateral sealing portion 530B1 is formed along the upper side surface of the battery element 100B. Accordingly, protrusion of the lateral sealing portion 530B1 can be suppressed without folding the lateral sealing portion 530B1.

In one example, a plurality of the battery cells 10B1 may be stacked in the Y direction to form a battery module. In the variant, the lateral sealing portion 530B1 overlaps at least a part of a surface of the battery element 100B substantially perpendicular to the Z direction. Specifically, the lateral sealing portion 530B1 overlaps at least a part of a surface of the battery element 100B facing in the upward direction. In the variant, therefore, a length of the battery module in the Y direction can be reduced by absence of the lateral sealing portion 530B1 between the battery cells 10B1 adjacent to each other in the Y direction as compared to a case where the lateral sealing portion 530B1 overlaps at least a part of a surface of the battery element 100B perpendicular to the Y direction. In the variant, volume efficiency of the battery module can be accordingly improved as compared to a case where the lateral sealing portion 530B1 overlaps at least a part of the surface of the battery element 100B substantially perpendicular to the Y direction.

In the example illustrated in Fig. 10, a length of the drawn portion 304B1 in the Y direction is substantially equal to a thickness of the battery element 100B in the Y direction. In other words, the lateral sealing portion 530B1 overlaps the substantially entire upper side surface of the battery element 100B. However, a length of the drawn portion 304B1 in the Y direction may be shorter than a thickness of the battery element 100B in the Y direction. For example, a length of the drawn portion 304B1 in the Y direction may be equal to or less than 50 % of a thickness of the battery element 100B in the Y direction. In other words, the lateral sealing portion 530B1 may overlap only a part of the upper side surface of the battery element 100B.

While the second embodiment and the variants of the present invention have been described with reference to the drawings, the embodiment and the variants are only exemplification of the present invention, and various configurations other than the above may be employed.

For example, in the second embodiment, the positive electrode tab 110B and the negative electrode tab 120B are disposed on opposite sides to each other in the X direction of the battery element 100B. However, both of the positive electrode tab 110B and the negative electrode tab 120B may be disposed on only one of a front side and a rear side in the X direction of the battery element 100B. In this case, for example, two lid members cover the front end portion and the rear end portion of the battery element 100B. Alternatively, a lid member may cover only a side of the battery element 100B from which the positive electrode tab 110B and the negative electrode tab 120B are drawn. In this example, the exterior film 300B may be sealed and folded along the battery element 100B on an opposite side to the lid member of the battery element 100B.

### (Third Embodiment)

Hereinafter, a third embodiment and variant of the present invention will be described by using drawings. In all of the drawings, a similar component has a similar reference sign, and description thereof will be appropriately omitted.

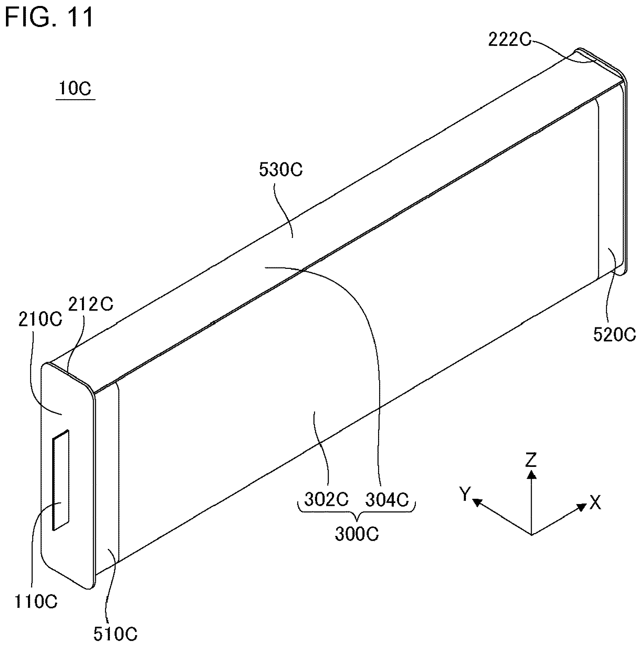

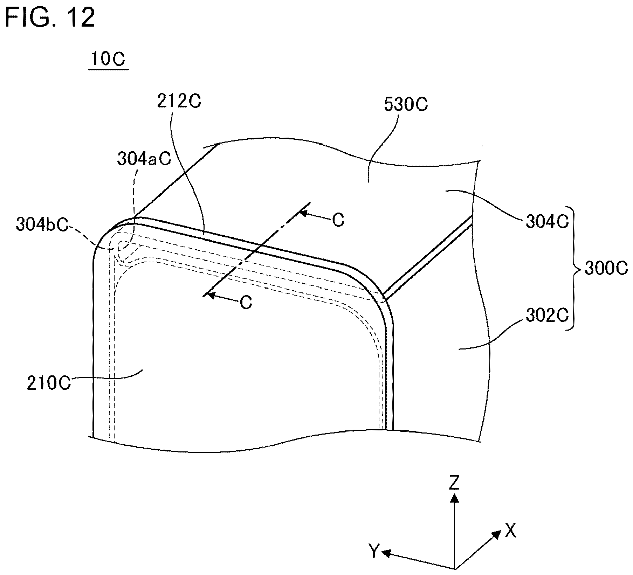

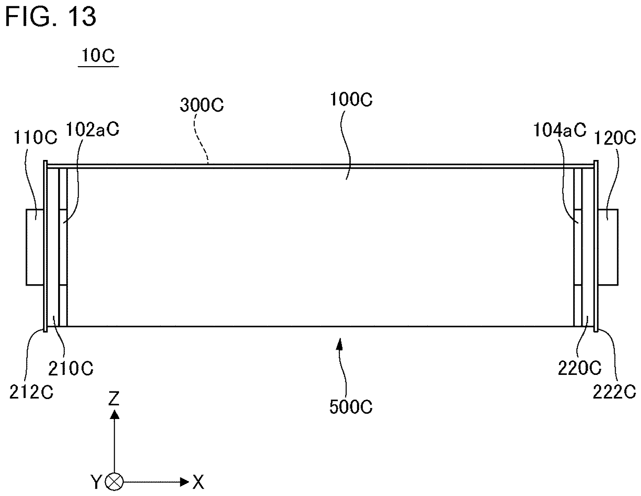

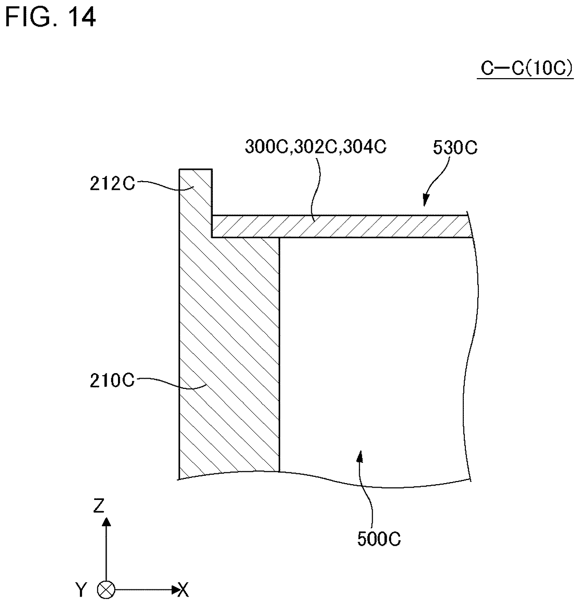

Fig. 11 is a front perspective view of a battery cell 10C according to the third embodiment. Fig. 12 is a front enlarged perspective view of a part of the battery cell 10C according to the third embodiment. Fig. 13 is a right side view of the battery cell 10C according to the third embodiment. Fig. 14 is a schematic cross-sectional view taken along a C-C line in Fig. 12. In Fig. 13, an exterior film 300C is illustrated to be transparent for description.

In each drawing, an X direction, a Y direction, and a Z direction are provided for description. The X direction indicates a front-rear direction of the battery cell 10C. The Y direction is orthogonal to the X direction. The Y direction indicates a left-right direction of the battery cell 10C. The Z direction is orthogonal to both of the X direction and the Y direction. The Z direction indicates an up-down direction of the battery cell 10C. A direction pointed by an arrow indicating the X direction, a direction pointed by an arrow indicating the Y direction, and a direction pointed by an arrow indicating the Z direction are a rear direction, a left direction, and an upward direction, respectively. However, a relationship among the X direction, the Y direction, the Z direction, the front-rear direction, the left-right direction, and the up-down direction of the battery cell 10C is not limited to this example.

A white circle with an X indicating the X direction, the Y direction, or the Z direction indicates that a direction from the front to the back of the paper plane is a direction pointed by an arrow indicating the direction.

The battery cell 10C includes a battery element 100C, a positive electrode tab 110C, a negative electrode tab 120C, a front lid member 210C, a rear lid member 220C, and the exterior film 300C. The exterior film 300C includes a wrapped portion 302C and the drawn portion 304C.

The battery element 100C has an approximate rectangular cuboid shape. A longitudinal direction of the battery element 100C is substantially parallel to the X direction. A length of the battery element 100C in the X direction may be, for example, but is not limited to, equal to or more than 300 mm and equal to or less than 500 mm, preferably, equal to or less than 450 mm. A transverse direction of the battery element 100C is substantially parallel to the Z direction. A length of the battery element 100C in the Z direction may be, for example, but is not limited to, equal to or more than 90 mm and equal to or less than 130 mm, preferably, equal to or less than 120 mm. A thickness direction of the battery element 100C is substantially parallel to the Y direction. A thickness of the battery element 100C in the Y direction may be, for example, but is not limited to, equal to or more than 20 mm and equal to or less than 50 mm, preferably, equal to or less than 45 mm. However, a shape of the battery element 100C is not limited to this example.

The battery element 100C includes at least one unillustrated positive electrode, at least one unillustrated negative electrode, and at least one unillustrated separator. For example, a plurality of the positive electrodes and a plurality of the negative electrodes are alternately stacked in the Y direction. At least a part of the separator is located between the positive electrode and the negative electrode adjacent to each other in the Y direction. For example, each of a plurality of sheet-shaped separators may be located between the positive electrode and the negative electrode adjacent to each other in the Y direction. Alternatively, one sheet-shaped separator may have a fanfold shape through a region between the positive electrode and the negative electrode adjacent to each other in the Y direction. Alternatively, the positive electrode, the negative electrode, and the separator may be wound with the separator located between the positive electrode and the negative electrode. In one example, the positive electrode, the negative electrode, and the separator are wound with both sides of one of the positive electrode and the negative electrode covered by the separator. In another example, a stacked body including a plurality of unit stacked bodies including the positive electrode, the separator, and the negative electrode in this order may be wound. However, a winding structure of the positive electrode, the negative electrode, and the separator is not limited to these examples.

The positive electrode tab 110C is disposed on the front of the battery element 100C. A rear end portion of the positive electrode tab 110C is electrically connected to a positive electrode current collector 102aC. The positive electrode current collector 102aC is drawn from the positive electrode of the battery element 100C to the front. In this way, the positive electrode tab 110C is electrically connected to the positive electrode of the battery element 100C.

The negative electrode tab 120C is disposed on the rear of the battery element 100C. A front end portion of the negative electrode tab 120C is electrically connected to a negative electrode current collector 104aC. The negative electrode current collector 104aC is drawn from the negative electrode of the battery element 100C to the rear. In this way, the negative electrode tab 120C is electrically connected to the negative electrode of the battery element 100C.

The front lid member 210C covers a front end portion of the battery element 100C. The front lid member 210C is formed of, for example, resin, metal, or the like. A front end portion of the positive electrode tab 110C is drawn from a front surface of the front lid member 210C. When viewed from the front, the front lid member 210C has a substantially rectangular shape. When viewed from the front, a longitudinal direction of the front lid member 210C is substantially parallel to the Z direction, and a transverse direction of the front lid member 210C is substantially parallel to the Y direction.

The rear lid member 220C covers a rear end portion of the battery element 100C. The rear lid member 220C is formed of, for example, resin, metal, or the like. A rear end portion of the negative electrode tab 120C is drawn from a rear surface of the rear lid member 220C. When viewed from the rear, the rear lid member 220C has a substantially rectangular shape. When viewed from the rear, a longitudinal direction of the rear lid member 220C is substantially parallel to the Z direction, and a transverse direction of the rear lid member 220C is substantially parallel to the Y direction.

As illustrated in Figs. 11 and 12, the wrapped portion 302C has a substantially tubular shape open toward both of the front and the rear. The front lid member 210C is disposed inside the front opening of the wrapped portion 302C except for a front protruding portion 212C described below. The rear lid member 220C is disposed inside the rear opening of the wrapped portion 302C except for a rear protruding portion 222C described below. The wrapped portion 302C is wrapped one revolution around the X direction of the battery element 100C, the front lid member 210C, and the rear lid member 220C. In this way, the front lid member 210C, the rear lid member 220C, and the wrapped portion 302C form a housing space 500C that houses the battery element 100C. An unillustrated electrolytic solution is housed together with the battery element 100C in the housing space 500C. A state of wrapping of the wrapped portion 302C around the battery element 100C is not limited to the example described above.

An outer circumferential surface of the front lid member 210C around the X direction and an inner circumferential surface of the front opening of the wrapped portion 302C around the X direction are bonded to each other by thermal bonding, for example. In this way, a front sealing portion 510C is formed.

An outer circumferential surface of the rear lid member 220C around the X direction and an inner circumferential surface of the rear opening of the wrapped portion 302C around the X direction are bonded to each other by thermal bonding, for example. In this way, a rear sealing portion 520C is formed.

As illustrated in Figs. 11 and 12, when viewed from the front, the drawn portion 304C is drawn from a corner of the wrapped portion 302C on an upper left side of the battery element 100C.
Specifically, as illustrated in Fig. 12, the drawn portion 304C includes a first drawn portion 304aC and a second drawn portion 304bC. The first drawn portion 304aC is drawn from one of both ends of the wrapped portion 302C in a circumferential direction around the X direction. The second drawn portion 304bC is drawn from the other of both ends of the wrapped portion 302C in the circumferential direction around the X direction. The first drawn portion 304aC and the second drawn portion 304bC are bonded to each other by thermal bonding, for example. In this way, when viewed from the front, a lateral sealing portion 530C is formed. The drawn portion 304C is folded along an upper surface of the battery element 100C. However, the drawn portion 304C may not be folded. A shape of the fold of the drawn portion 304C is not limited to the shape according to the third embodiment.

As illustrated in Figs. 11, 12, and 14, the front protruding portion 212C is provided on the outer circumferential surface of the front lid member 210C. The front protruding portion 212C is provided on the entire outer circumferential surface of the front lid member 210C. However, the front protruding portion 212C may be provided on only a part of the entire outer circumferential surface of the front lid member 210C. The front protruding portion 212C is located on the front of a front end portion of the exterior film 300C. In this way, the front protruding portion 212C covers the front end portion of the exterior film 300C. Thus, exposure of the front end portion of the exterior film 300C can be suppressed by the front protruding portion 212C. Accordingly, even if a conductor such as a conductive sheet included in the exterior film 300C is exposed from the front end portion of the exterior film 300C, a short circuit of the exterior film 300C via the conductor can be suppressed.

As illustrated in Fig. 11, similarly to the outer circumferential surface of the front lid member 210C, the rear protruding portion 222C is provided on the outer circumferential surface of the rear lid member 220C. Similarly to the front protruding portion 212C, the rear protruding portion 222C covers a rear end portion of the exterior film 300C. Thus, exposure of the rear end portion of the exterior film 300C can be suppressed by the rear protruding portion 222C. Accordingly, even if a conductor such as a conductive sheet included in the exterior film 300C is exposed from the rear end portion of the exterior film 300C, a short circuit of the exterior film 300C via the conductor can be suppressed.

In the third embodiment, both of the front protruding portion 212C and the rear protruding portion 222C are provided. However, only one of the front protruding portion 212C and the rear protruding portion 222C may be provided.

Next, one example of a method of manufacturing the battery cell 10C according to the third embodiment will be described. In this example, the battery cell 10C according to the third embodiment is manufactured as follows.

First, the battery element 100C is manufactured. The battery element 100C includes at least one positive electrode, at least one negative electrode, and at least one separator.

Next, the positive electrode tab 110C and the front lid member 210C are bonded to each other. Similarly, the negative electrode tab 120C and the rear lid member 220C are bonded to each other.
Next, the positive electrode tab 110C and the positive electrode current collector 102aC are bonded to each other. Similarly, the negative electrode tab 120C and the negative electrode current collector 104aC are bonded to each other. However, after the positive electrode tab 110C and the positive electrode current collector 102aC are bonded to each other, the positive electrode tab 110C and the front lid member 210C may be bonded to each other. Similarly, after the negative electrode tab 120C and the negative electrode current collector 104aC are bonded to each other, the negative electrode tab 120C and the rear lid member 220C may be bonded to each other.

Next, the exterior film 300C is wrapped one revolution around the X direction of the battery element 100C, the front lid member 210C, and the rear lid member 220C. In this way, the wrapped portion 302C is formed. An extra length of the exterior film 300C is drawn as the drawn portion 304C. In this state, the front protruding portion 212C is located on the front of the front end portion of the exterior film 300C. In this way, the front end portion of the exterior film 300C is covered by the front protruding portion 212C. The rear protruding portion 222C is located on the rear of the rear end portion of the exterior film 300C. In this way, the rear end portion of the exterior film 300C is covered by the rear protruding portion 222C.

Next, the outer circumferential surface of the front lid member 210C around the X direction and the inner circumferential surface of the front opening of the wrapped portion 302C around the X direction are bonded to each other by thermal bonding. In this way, the front sealing portion 510C is formed. Next, the outer circumferential surface of the rear lid member 220C around the X direction and the inner circumferential surface of the rear opening of the wrapped portion 302C around the X direction are bonded to each other by thermal bonding. In this way, the rear sealing portion 520C is formed.

Next, an electrolytic solution is injected into the housing space 500C via a gap between the first drawn portion 304aC and the second drawn portion 304bC. Next, the vacuum is drawn from the housing space 500C via the gap between the first drawn portion 304aC and the second drawn portion 304bC. Next, the lateral sealing portion 530C is formed by bonding the first drawn portion 304aC and the second drawn portion 304bC by thermal bonding. In this way, the housing space 500C is vacuum-sealed.

A method of vacuum-sealing the housing space 500C is not limited to the above-described example. In another example, first, the lateral sealing portion 530C is formed by bonding the first drawn portion 304aC and the second drawn portion 304bC by thermal bonding. Next, an electrolytic solution is injected into the housing space 500C via a solution injection hole provided in at least one of the front lid member 210C and the rear lid member 220C. Next, the vacuum is drawn from the housing space 500C via the solution injection hole. Next, the solution injection hole is covered by a predetermined lid member.

Next, the lateral sealing portion 530C is folded along the upper surface of the battery element 100C.

In this way, the battery cell 10C is manufactured.

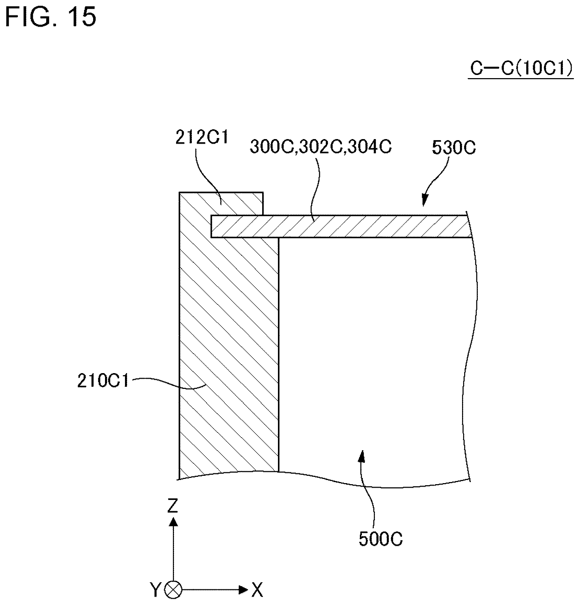

Fig. 15 is a diagram illustrating a variant of Fig. 14.

A front lid member 210C1 of a battery cell 10C1 according to the variant includes a front covering portion 212C1. The front covering portion 212C1 covers the front end portion of the exterior film 300C and a vicinity portion of the front end portion of the outer circumferential surface of the exterior film 300C. Particularly, the front covering portion 212C1 covers the upper surface of the lateral sealing portion 530C above the housing space 500C and in the vicinity of the front end portion of the exterior film 300C. When the front covering portion 212C1 covers at least a part of the front end portion of the exterior film 300C, even if a conductor such as a conductive sheet included in the exterior film 300C is exposed from the front end portion of the exterior film 300C, a short circuit of the exterior film 300C via the conductor can be suppressed. When the front covering portion 212C1 covers at least a part of the outer circumferential surface of the exterior film 300C, a position of the front end portion of the exterior film 300C can be fixed by the front covering portion 212C1.

In one example, the front covering portion 212C1 can be formed by deforming the front protruding portion 212C according to the third embodiment. For example, after all steps of the method of manufacturing the battery cell 10 according to the third embodiment, the front protruding portion 212C is squeezed while heat is applied to the front protruding portion 212C, to flow a material constituting the front protruding portion 212C toward the rear. In this way, the material constituting the front protruding portion 212C covers not only the front end portion of the exterior film 300C but also the outer circumferential surface of the exterior film 300C. Particularly, when the lateral sealing portion 530C is folded along the battery element 100C before the front protruding portion 212C is deformed, the front covering portion 212C1 can cover the outer surface of the lateral sealing portion 530C.

In the example illustrated in Fig. 15, the structure of the front lid member 210C1 is described. The structure of the front lid member 210C1 in Fig. 15 can also be similarly applied to the rear lid member.

While the third embodiment and the variant of the present invention have been described with reference to the drawings, the embodiment and the variant are only exemplification of the present invention, and various configurations other than the above may be employed.

For example, in the third embodiment, the positive electrode tab 110C and the negative electrode tab 120C are disposed on opposite sides to each other in the X direction of the battery element 100C. However, both of the positive electrode tab 110C and the negative electrode tab 120C may be disposed on only one of a front side and a rear side in the X direction of the battery element 100C. In this case, for example, two lid members cover the front end portion and the rear end portion of the battery element 100C. Alternatively, a lid member may cover only a side of the battery element 100C from which the positive electrode tab 110C and the negative electrode tab 120C are drawn. In this example, the exterior film 300C may be sealed and folded along the battery element 100C on an opposite side to the lid member of the battery element 100C.

### (Fourth Embodiment)

Hereinafter, a fourth embodiment and variant of the present invention will be described by using drawings. In all of the drawings, a similar component has a similar reference sign, and description thereof will be appropriately omitted.

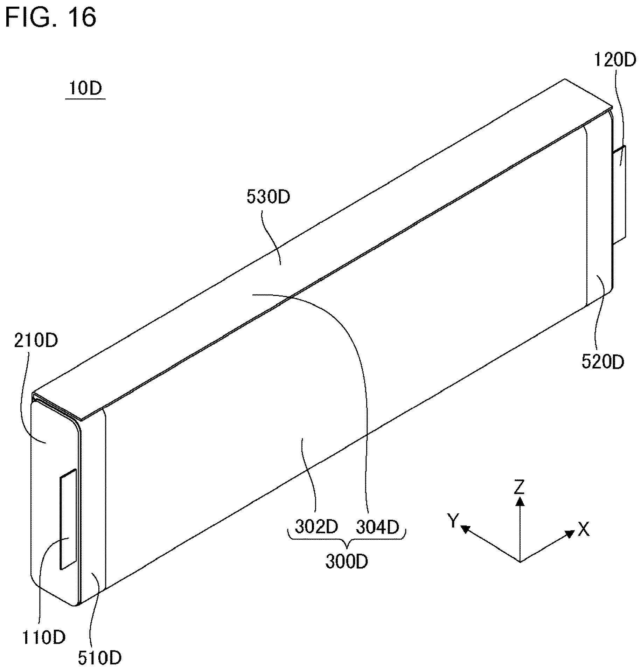

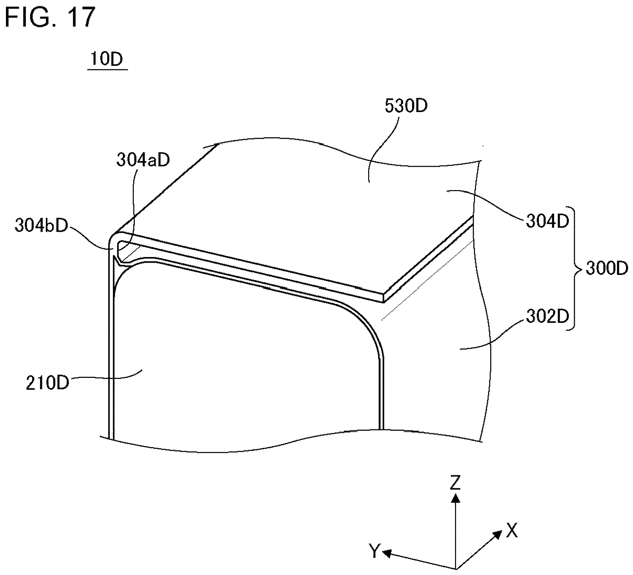

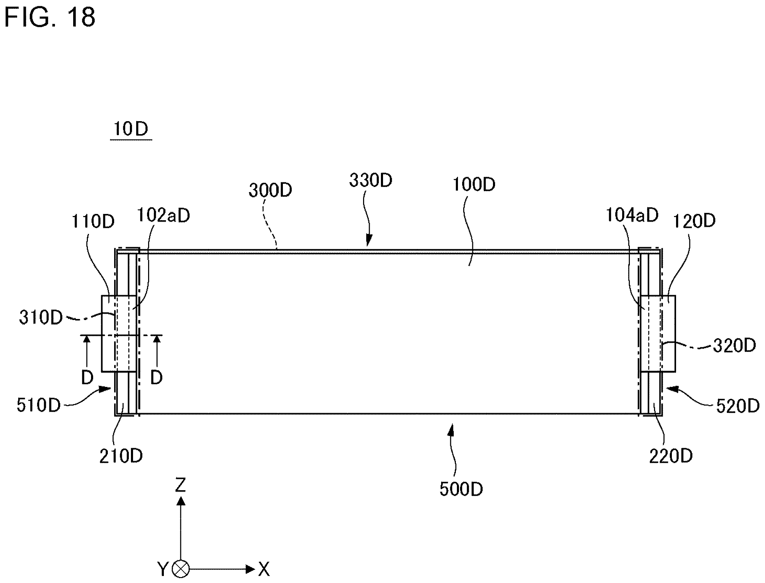

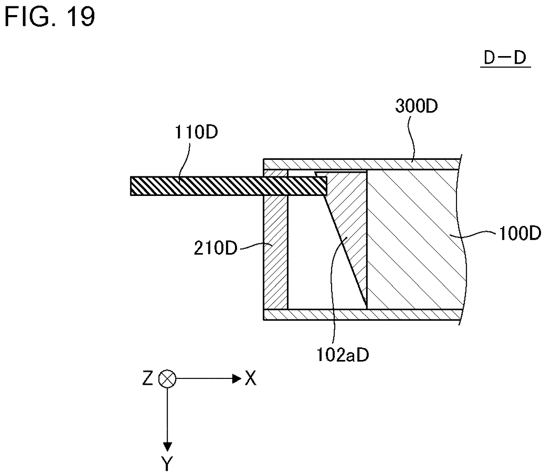

Fig. 16 is a front perspective view of a battery cell 10D according to the fourth embodiment. Fig. 17 is a front enlarged perspective view of a part of the battery cell 10D according to the fourth embodiment. Fig. 18 is a right side view of the battery cell 10D according to the fourth embodiment. Fig. 19 is a schematic cross-sectional view taken along a D-D line in Fig. 18. In Fig. 18, an exterior film 300D is illustrated to be transparent for description.

In each drawing, an X direction, a Y direction, and a Z direction are provided for description. The X direction indicates a front-rear direction of the battery cell 10D. The Y direction is orthogonal to the X direction. The Y direction indicates a left-right direction of the battery cell 10D. The Z direction is orthogonal to both of the X direction and the Y direction. The Z direction indicates an up-down direction of the battery cell 10D. A direction pointed by an arrow indicating the X direction, a direction pointed by an arrow indicating the Y direction, and a direction pointed by an arrow indicating the Z direction are a rear direction, a left direction, and an upward direction, respectively. However, a relationship among the X direction, the Y direction, the Z direction, the front-rear direction, the left-right direction, and the up-down direction of the battery cell 10D is not limited to this example.

A white circle with an X indicating the X direction, the Y direction, or the Z direction indicates that a direction from the front to the back of the paper plane is a direction pointed by an arrow indicating the direction.

The battery cell 10D includes a battery element 100D, a positive electrode tab 110D, a negative electrode tab 120D, a front lid member 210D, a rear lid member 220D, and the exterior film 300D. The exterior film 300D includes a wrapped portion 302D and a drawn portion 304D.

The battery element 100D has an approximate rectangular cuboid shape. A longitudinal direction of the battery element 100D is substantially parallel to the X direction. A length of the battery element 100D in the X direction may be, for example, but is not limited to, equal to or more than 300 mm and equal to or less than 500 mm, preferably, equal to or less than 450 mm. A transverse direction of the battery element 100D is substantially parallel to the Z direction. A length of the battery element 100D in the Z direction may be, for example, but is not limited to, equal to or more than 90 mm and equal to or less than 130 mm, preferably, equal to or less than 120 mm. A thickness direction of the battery element 100D is substantially parallel to the Y direction. A thickness of the battery element 100D in the Y direction may be, for example, but is not limited to, equal to or more than 20 mm and equal to or less than 50 mm, preferably, equal to or less than 45 mm. However, a shape of the battery element 100D is not limited to this example.

The battery element 100D includes at least one unillustrated positive electrode, at least one unillustrated negative electrode, and at least one unillustrated separator. For example, a plurality of the positive electrodes and a plurality of the negative electrodes are alternately stacked in the Y direction. At least a part of the separator is located between the positive electrode and the negative electrode adjacent to each other in the Y direction. For example, each of a plurality of sheet-shaped separators may be located between the positive electrode and the negative electrode adjacent to each other in the Y direction. Alternatively, one sheet-shaped separator may have a fanfold shape through a region between the positive electrode and the negative electrode adjacent to each other in the Y direction. Alternatively, the positive electrode, the negative electrode, and the separator may be wound with the separator located between the positive electrode and the negative electrode. In one example, the positive electrode, the negative electrode, and the separator are wound with both sides of one of the positive electrode and the negative electrode covered by the separator. In another example, a stacked body including a plurality of unit stacked bodies including the positive electrode, the separator, and the negative electrode in this order may be wound. However, a winding structure of the positive electrode, the negative electrode, and the separator is not limited to these examples.

As illustrated in Fig. 18, the positive electrode tab 110D is disposed on the front of the battery element 100D. A rear end portion of the positive electrode tab 110D is electrically connected to a positive electrode current collector 102aD. The positive electrode current collector 102aD is drawn from the positive electrode to the front. In this way, the positive electrode tab 110D is electrically connected to the plurality of positive electrodes. As illustrated in Fig. 19, a plurality of the positive electrode current collectors 102aD are collected between the battery element 100D and the front lid member 210D. In other words, a collection portion of the plurality of positive electrode current collectors 102aD is present between the battery element 100D and the positive electrode tab 110D. A width in the Y direction of the collection portion of the plurality of positive electrode current collectors 102aD decreases from the battery element 100D toward the front. In Fig. 19, the plurality of collected positive electrode current collectors 102aD drawn from the battery element 100D are schematically illustrated to have a triangular shape.

As illustrated in Fig. 18, the negative electrode tab 120D is disposed on the rear of the battery element 100D. A front end portion of the negative electrode tab 120D is electrically connected to a negative electrode current collector 104aD. The negative electrode current collector 104aD is drawn from the negative electrode to the rear. In this way, the negative electrode tab 120D is electrically connected to the plurality of negative electrodes. Similarly to the example illustrated in Fig. 19, a collection portion of a plurality of the negative electrode current collectors 104aD is present between the battery element 100D and the negative electrode tab 120D.

The front lid member 210D covers a front end portion of the battery element 100D. The front lid member 210D is formed of, for example, resin, metal, or the like. A front end portion of the positive electrode tab 110D is drawn from a front surface of the front lid member 210D toward the front. When viewed from the front, the front lid member 210D has a substantially rectangular shape. When viewed from the front, a longitudinal direction of the front lid member 210D is substantially parallel to the Z direction, and a transverse direction of the front lid member 210D is substantially parallel to the Y direction.

The rear lid member 220D covers a rear end portion of the battery element 100D. The rear lid member 220D is formed of, for example, resin, metal, or the like. A rear end portion of the negative electrode tab 120D is drawn from a rear surface of the rear lid member 220D toward the rear. When viewed from the rear, the rear lid member 220D has a substantially rectangular shape. When viewed from the rear, a longitudinal direction of the rear lid member 220D is substantially parallel to the Z direction, and a transverse direction of the rear lid member 220D is substantially parallel to the Y direction.

As illustrated in Figs. 16 and 17, the wrapped portion 302D has a substantially tubular shape open toward both of the front and the rear. The front lid member 210D is disposed inside the front opening of the wrapped portion 302D. The rear lid member 220D is disposed inside the rear opening of the wrapped portion 302D. The wrapped portion 302D is wrapped one revolution around the X direction of the battery element 100D, the front lid member 210D, and the rear lid member 220D. In this way, the front lid member 210D, the rear lid member 220D, and the wrapped portion 302D form a housing space 500D that houses the battery element 100D. An unillustrated electrolytic solution is housed together with the battery element 100D in the housing space 500D. A state of wrapping of the wrapped portion 302D around the battery element 100D is not limited to the example described above.

An outer circumferential surface of the front lid member 210D around the X direction and an inner circumferential surface of the front opening of the wrapped portion 302D around the X direction are bonded to each other by thermal bonding, for example. In this way, a front sealing portion 510D is formed.

An outer circumferential surface of the rear lid member 220D around the X direction and an inner circumferential surface of the rear opening of the wrapped portion 302D around the X direction are bonded to each other by thermal bonding, for example. In this way, a rear sealing portion 520D is formed.

As illustrated in Figs. 16 and 17, when viewed from the front, the drawn portion 304D is drawn from a corner of the wrapped portion 302D on an upper left side of the battery element 100D. Specifically, as illustrated in Fig. 17, the drawn portion 304D includes a first drawn portion 304aD and a second drawn portion 304bD. The first drawn portion 304aD is drawn from one of both ends of the wrapped portion 302D in a circumferential direction around the X direction. The second drawn portion 304bD is drawn from the other of both ends of the wrapped portion 302D in the circumferential direction around the X direction. The first drawn portion 304aD and the second drawn portion 304bD are bonded to each other by thermal bonding, for example. In this way, when viewed from the front, a lateral sealing portion 530D is formed. The drawn portion 304D is folded along an upper surface of the battery element 100D. However, the drawn portion 304D may not be folded. A shape of the fold of the drawn portion 304D is not limited to the shape according to the fourth embodiment.

As illustrated in Fig. 18, the exterior film 300D includes a front portion 310D, a rear portion 320D, and a central portion 330D. The front portion 310D is located on a circumference around the X direction of the collection portion of the positive electrode current collector 102aD. The rear portion 320D is located on a circumference around the X direction of the collection portion of the negative electrode current collector 104aD. The central portion 330D is located between the front portion 310D and the rear portion 320D in the X direction. The central portion 330D is located on a circumference around the X direction of the battery element 100D.

In the exterior film 300D, no wrinkle is present in the central portion 330D, and a wrinkle is present in at least one of the front portion 310D and the rear portion 320D. A wrinkle may be formed in the exterior film 300D due to a distortion in a shape of the exterior film 300D. If a wrinkle is present in the central portion 330D, the wrinkle may be transferred to the battery element 100D. In this way, a characteristic of the battery cell 10D may be affected by the wrinkle. For example, in a portion in presence of a wrinkle, an ion resistance may vary because unevenness may occur in an interval between a positive electrode and a negative electrode. As another example, unevenness of an interval between a positive electrode and a negative electrode may further accelerate deterioration in a portion having a relatively small resistance between the positive electrode and the negative electrode than in another portion. It is relatively difficult to remove a wrinkle itself of the exterior film 300D. In the fourth embodiment, even if a wrinkle is formed in the central portion 330D, the wrinkle is moved to at least one of the front portion 310D and the rear portion 320D. The wrinkle present in the front portion 310D or the rear portion 320D is less likely to affect a characteristic of the battery cell 10D. Thus, in the fourth embodiment, a characteristic of the battery cell 10D can be stabilized.
Furthermore, in the fourth embodiment, a space formed by the wrinkle on an inner side of the front portion 310D or the rear portion 320D can be used as a space for housing an electrolytic solution and a space for housing gas.

The wrinkle of the exterior film 300D may be generated due to, for example, a difference between a size of the battery element 100D and a size of the front lid member 210D or the rear lid member 220D when viewed from the X direction.

In one example, when viewed from the X direction, a size of the front lid member 210D may be larger than a size of the battery element 100D. For example, a length of the front lid member 210D in the Y direction may be longer than a thickness of the battery element 100D in the Y direction. For example, a plurality of the battery cells 10D may be stacked in the Y direction to form a battery module. In this example, a compression pad may be disposed between the central portions 330D of the battery cells 10D adjacent to each other in the Y direction. In this battery module, a length of the front lid member 210D in the Y direction may be longer than a thickness of the battery element 100D in the Y direction by an amount corresponding to a thickness of the compression pad in the Y direction. In this way, the plurality of battery cells 10D can be stably stacked in the Y direction. Similarly to the example described above, when viewed from the X direction, a size of the rear lid member 220D may be larger than a size of the battery element 100D.

In another example, when viewed from the X direction, a size of the front lid member 210D may be smaller than a size of the battery element 100D. For example, a length of the front lid member 210D in the Y direction may be shorter than a thickness of the battery element 100D in the Y direction. For example, the plurality of battery cells 10D may be stacked in the Y direction to form a battery module. In this example, when a length of the front lid member 210D in the Y direction is shorter than a thickness of the battery element 100D in the Y direction, contact and interference between the front lid members 210D adjacent to each other in the Y direction can be suppressed. An actual thickness of the battery element 100D in the Y direction may be thinner than a designed thickness of the battery element 100D in the Y direction due to a tolerance of a thickness of the battery element 100D in the Y direction. Even in this case, when a length of the front lid member 210D in the Y direction is shorter than a thickness of the battery element 100D in the Y direction, the plurality of battery cells 10D can be stably stacked in the Y direction to form the battery module.

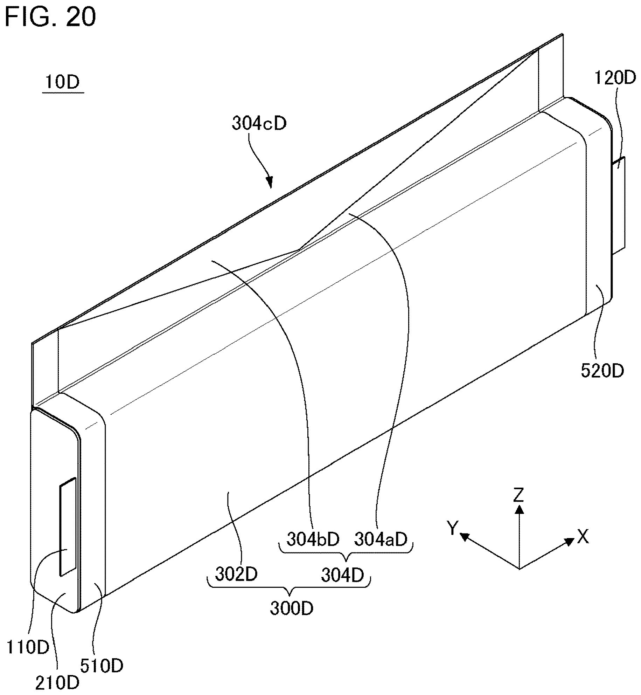

Fig. 20 is a diagram illustrating a first example of a method of manufacturing the battery cell 10D according to the fourth embodiment. In this first example, the battery cell 10D is manufactured as follows.

First, the battery element 100D is manufactured. The battery element 100D includes at least one positive electrode, at least one negative electrode, and at least one separator.

Next, the positive electrode tab 110D and the front lid member 210D are bonded to each other. Similarly, the negative electrode tab 120D and the rear lid member 220D are bonded to each other.
Next, the positive electrode tab 110D and the positive electrode current collector 102aD are bonded to each other. Similarly, the negative electrode tab 120D and the negative electrode current collector 104aD are bonded to each other. However, after the positive electrode tab 110D and the positive electrode current collector 102aD are bonded to each other, the positive electrode tab 110D and the front lid member 210D may be bonded to each other. Similarly, after the negative electrode tab 120D and the negative electrode current collector 104aD are bonded to each other, the negative electrode tab 120D and the rear lid member 220D may be bonded to each other.

Next, the exterior film 300D is wrapped around the X direction of the battery element 100D, the front lid member 210D, and the rear lid member 220D. In this way, the wrapped portion 302D is formed around the X direction of the battery element 100D, the front lid member 210D, and the rear lid member 220D. An extra length of the exterior film 300D is drawn as the drawn portion 304D from the wrapped portion 302D.

Next, the outer circumferential surface of the front lid member 210D around the X direction and the inner circumferential surface of the front opening of the wrapped portion 302D around the X direction are bonded to each other by thermal bonding. In this way, the front sealing portion 510D is formed. Next, the outer circumferential surface of the rear lid member 220D around the X direction and the inner circumferential surface of the rear opening of the wrapped portion 302D around the X direction are bonded to each other by thermal bonding. In this way, the rear sealing portion 520D is formed.

Next, as illustrated in Fig. 20, an electrolytic solution is injected into the housing space 500D via a solution injection opening 304cD. The solution injection opening 304cD is formed by a gap between the first drawn portion 304aD and the second drawn portion 304bD.

Next, the housing space 500D is vacuum-sealed. Specifically, after a vacuum is drawn from the housing space 500D via the solution injection opening 304cD, the lateral sealing portion 530D is formed by bonding first drawn portion 304aD and the second drawn portion 304bD to each other by thermal bonding. A wrinkle may be formed in the exterior film 300D due to the vacuum drawn from the housing space 500D. If the wrinkle is present in the central portion 330D, the wrinkle is moved to at least one of the front portion 310D and the rear portion 320D.

Next, the drawn portion 304D is folded along the upper surface of the battery element 100D.

In this way, the battery cell 10D is manufactured.

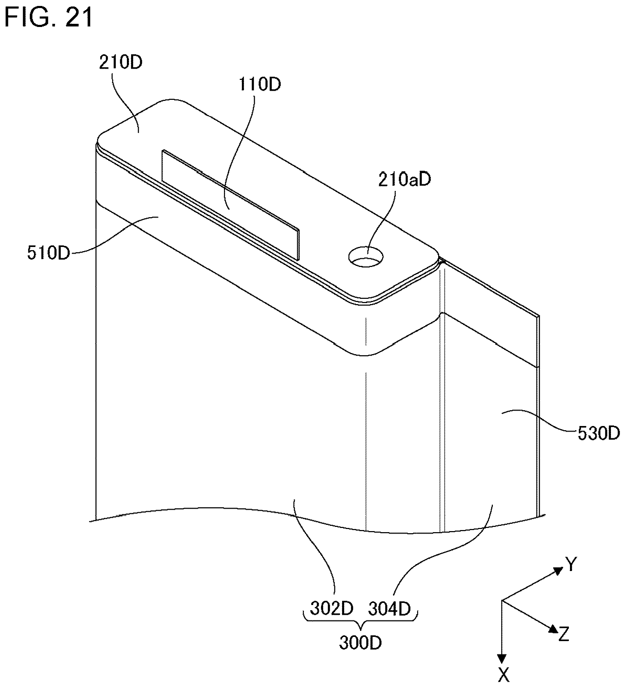

Fig. 21 is a diagram illustrating a second example of the method of manufacturing the battery cell 10D according to the fourth embodiment. This second example is similar to the first example described above except for the following points.

First, similarly to the first example, the battery element 100D is manufactured. Next, similarly to the first example, the positive electrode tab 110D and the front lid member 210D are bonded to each other. The negative electrode tab 120D and the rear lid member 220D are bonded to each other. Next, similarly to the first example, the positive electrode tab 110D and the positive electrode current collector 102aD are bonded to each other. The negative electrode tab 120D and the negative electrode current collector 104aD are bonded to each other.

Next, the wrapped portion 302D and the drawn portion 304D are formed by wrapping the exterior film 300D around the X direction of the battery element 100D, the front lid member 210D, and the rear lid member 220D. Next, the outer circumferential surface of the front lid member 210D around the X direction and the inner circumferential surface of the front opening of the wrapped portion 302D around the X direction are bonded to each other by thermal bonding. In this way, the front sealing portion 510D is formed. Next, the outer circumferential surface of the rear lid member 220D around the X direction and the inner circumferential surface of the rear opening of the wrapped portion 302D around the X direction are bonded to each other by thermal bonding. In this way, the rear sealing portion 520D is formed. Next, the first drawn portion 304aD and the second drawn portion 304bD are bonded to each other by thermal bonding. In this way, the lateral sealing portion 530D is formed.

Next, as illustrated in Fig. 21, an electrolytic solution is injected into the housing space 500D via a solution injection hole 210aD provided in the front lid member 210D. Next, the housing space 500D is vacuum-sealed. Specifically, after a vacuum is drawn from the housing space 500D via the solution injection hole 210aD, the solution injection hole 210aD is covered by a predetermined lid component. A wrinkle may be formed in the exterior film 300D due to the vacuum drawn from the housing space 500D. If the wrinkle is present in the central portion 330D, the wrinkle is moved to at least one of the front portion 310D and the rear portion 320D. The solution injection hole may be provided in the rear lid member 220D.

Next, similarly to the first example, the drawn portion 304D is folded along the upper surface of the battery element 100D.

In this way, the battery cell 10D is manufactured.

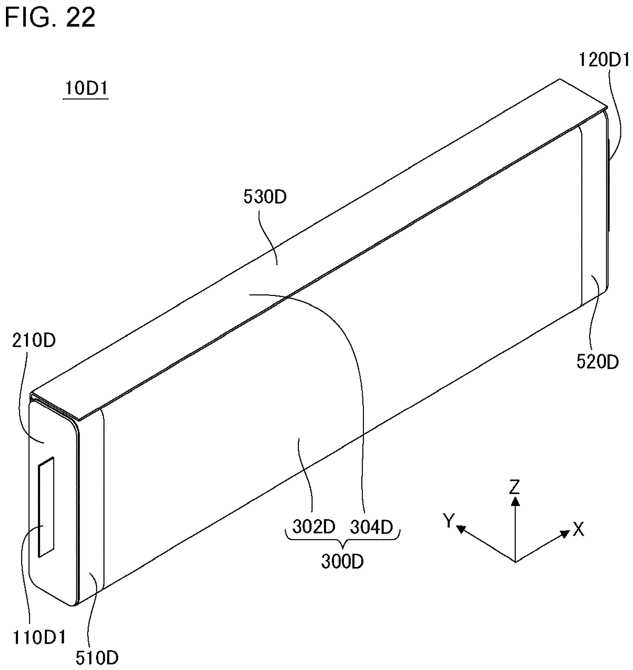

Fig. 22 is a front perspective view of a battery cell 10D1 according to a variant. The battery cell 10D1 according to the variant is similar to the battery cell 10D according to the fourth embodiment except for the following points.

In the variant, a positive electrode tab 110D1 is drawn approximately from the center of the front lid member 210D in the Y direction. A negative electrode tab 120D1 is drawn approximately from the center of the rear lid member in the Y direction. Also in the variant, the collection portion of the plurality of positive electrode current collectors is present between the battery element and the positive electrode tab 110D1. Similarly, the collection portion of the plurality of the negative electrode current collectors is present between the battery element and the negative electrode tab 120D1. Also in the variant, a wrinkle of the exterior film 300D is present around the collection portions of the exterior film 300D. Accordingly, also in the variant, similarly to the fourth embodiment, a characteristic of the battery cell 10D1 can be stabilized.

While the fourth embodiment and the variant of the present invention have been described with reference to the drawings, the embodiment and the variant are only exemplification of the present invention, and various configurations other than the above may be employed.

For example, in the fourth embodiment, the positive electrode tab 110D and the negative electrode tab 120D are disposed on opposite sides to each other in the X direction of the battery element 100D. However, both of the positive electrode tab 110D and the negative electrode tab 120D may be disposed on only one of a front side and a rear side in the X direction of the battery element 100D. In this case, for example, two lid members cover the front end portion and the rear end portion of the battery element 100D. Alternatively, a lid member may cover only a side of the battery element 100D from which the positive electrode tab 110D and the negative electrode tab 120D are drawn. In this example, the exterior film 300D may be sealed and folded along the battery element 100D on an opposite side to the lid member of the battery element 100D.

### (Fifth Embodiment)

Hereinafter, a fifth embodiment and variant of the present invention will be described by using drawings. In all of the drawings, a similar component has a similar reference sign, and description thereof will be appropriately omitted.

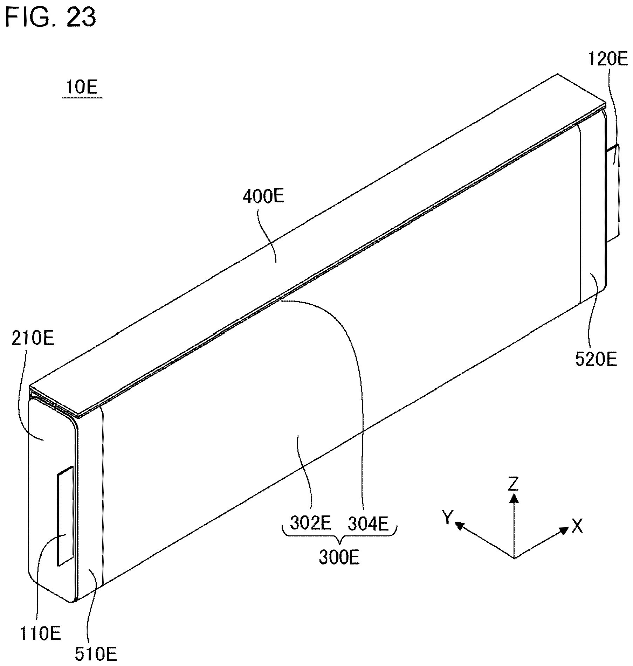

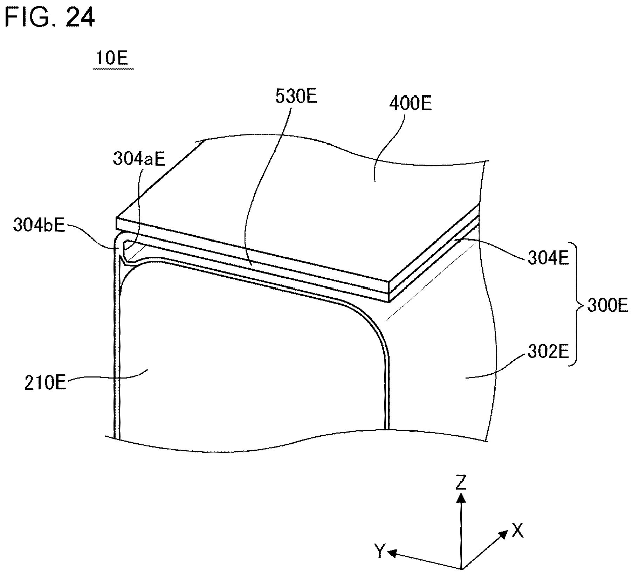

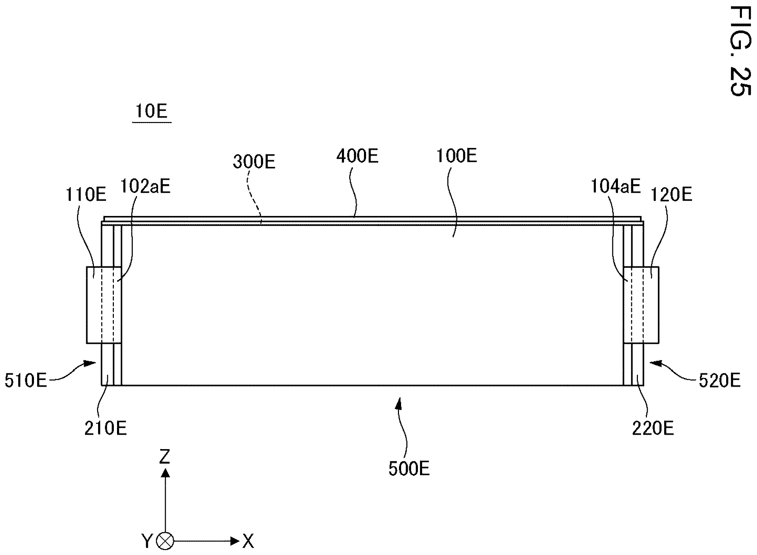

Fig. 23 is a front perspective view of a battery cell 10E according to the fifth embodiment. Fig. 24 is a front enlarged perspective view of a part of the battery cell 10E according to the fifth embodiment. Fig. 25 is a right side view of the battery cell 10E according to the fifth embodiment. In Fig. 25, an exterior film 300E is illustrated to be transparent for description.

In each drawing, an X direction, a Y direction, and a Z direction are provided for description. The X direction indicates a front-rear direction of the battery cell 10E. The Y direction is orthogonal to the X direction. The Y direction indicates a left-right direction of the battery cell 10E. The Z direction is orthogonal to both of the X direction and the Y direction. The Z direction indicates an up-down direction of the battery cell 10E. A direction pointed by an arrow indicating the X direction, a direction pointed by an arrow indicating the Y direction, and a direction pointed by an arrow indicating the Z direction are a rear direction, a left direction, and an upward direction, respectively. However, a relationship among the X direction, the Y direction, the Z direction, the front-rear direction, the left-right direction, and the up-down direction of the battery cell 10E is not limited to this example.

A white circle with an X indicating the X direction, the Y direction, or the Z direction indicates that a direction from the front to the back of the paper plane is a direction pointed by an arrow indicating the direction.

The battery cell 10E includes a battery element 100E, a positive electrode tab 110E, a negative electrode tab 120E, a front lid member 210E, a rear lid member 220E, the exterior film 300E, and a reinforcing plate 400E. The exterior film 300E includes a wrapped portion 302E and a drawn portion 304E.

The battery element 100E has an approximate rectangular cuboid shape. A longitudinal direction of the battery element 100E is substantially parallel to the X direction. A length of the battery element 100E in the X direction may be, for example, but is not limited to, equal to or more than 300 mm and equal to or less than 500 mm, preferably, equal to or less than 450 mm. A transverse direction of the battery element 100E is substantially parallel to the Z direction. A length of the battery element 100E in the Z direction may be, for example, but is not limited to, equal to or more than 90 mm and equal to or less than 130 mm, preferably, equal to or less than 120 mm. A thickness direction of the battery element 100E is substantially parallel to the Y direction. A thickness of the battery element 100E in the Y direction may be, for example, but is not limited to, equal to or more than 20 mm and equal to or less than 50 mm, preferably, equal to or less than 45 mm. However, a shape of the battery element 100E is not limited to this example.

The battery element 100E includes at least one unillustrated positive electrode, at least one unillustrated negative electrode, and at least one unillustrated separator. For example, a plurality of the positive electrodes and a plurality of the negative electrodes are alternately stacked in the Y direction. At least a part of the separator is located between the positive electrode and the negative electrode adjacent to each other in the Y direction. For example, each of a plurality of sheet-shaped separators may be located between the positive electrode and the negative electrode adjacent to each other in the Y direction. Alternatively, when viewed from the X direction, the separator may have a fanfold shape including a fold on both sides in the Z direction. In this example, a portion of the separator located between the folds on the both sides in the Z direction is disposed between the positive electrode and the negative electrode adjacent to each other in the Y direction. Alternatively, the positive electrode, the negative electrode, and the separator may be wound with the separator located between the positive electrode and the negative electrode. In one example, the positive electrode, the negative electrode, and the separator are wound with both sides of one of the positive electrode and the negative electrode covered by the separator. In another example, a stacked body including a plurality of unit stacked bodies including the positive electrode, the separator, and the negative electrode in this order may be wound. However, a winding structure of the positive electrode, the negative electrode, and the separator is not limited to these examples.

As illustrated in Fig. 25, the positive electrode tab 110E is disposed on the front of the battery element 100E. The positive electrode tab 110E is electrically connected to a positive electrode current collector 102aE. The positive electrode current collector 102aE is drawn from the positive electrode to the front. In this way, the positive electrode tab 110E is electrically connected to the plurality of positive electrodes.

As illustrated in Fig. 25, the negative electrode tab 120E is disposed on the rear of the battery element 100E. The negative electrode tab 120E is electrically connected to a negative electrode current collector 104aE. The negative electrode current collector 104aE is drawn from the negative electrode to the rear. In this way, the negative electrode tab 120E is electrically connected to the plurality of negative electrodes.

The front lid member 210E covers a front end portion of the battery element 100E. The front lid member 210E is formed of, for example, resin, metal, or the like. A front end portion of the positive electrode tab 110E protrudes from a front surface of the front lid member 210E. When viewed from the front, the front lid member 210E has a substantially rectangular shape. When viewed from the front, a longitudinal direction of the front lid member 210E is substantially parallel to the Z direction, and a transverse direction of the front lid member 210E is substantially parallel to the Y direction.

The rear lid member 220E covers a rear end portion of the battery element 100E. The rear lid member 220E is formed of, for example, resin, metal, or the like. A rear end portion of the negative electrode tab 120E protrudes from a rear surface of the rear lid member 220E. When viewed from the rear, the rear lid member 220E has a substantially rectangular shape. When viewed from the rear, a longitudinal direction of the rear lid member 220E is substantially parallel to the Z direction, and a transverse direction of the rear lid member 220E is substantially parallel to the Y direction.

As illustrated in Figs. 23 and 24, the wrapped portion 302E has a substantially tubular shape open toward both of the front and the rear. The front lid member 210E is disposed inside the front opening of the wrapped portion 302E. The rear lid member 220E is disposed inside the rear opening of the wrapped portion 302E. The wrapped portion 302E is wrapped one revolution around the X direction of the battery element 100E, the front lid member 210E, and the rear lid member 220E. In this way, the front lid member 210E, the rear lid member 220E, and the wrapped portion 302E form a housing space 500E that houses the battery element 100E. An unillustrated electrolytic solution is housed together with the battery element 100E in the housing space 500E. A state of wrapping of the wrapped portion 302E around the battery element 100E is not limited to the example described above.

An outer circumferential surface of the front lid member 210E around the X direction and an inner circumferential surface of the front opening of the wrapped portion 302E around the X direction are bonded to each other by thermal bonding, for example. In this way, a front sealing portion 510E is formed.

An outer circumferential surface of the rear lid member 220E around the X direction and an inner circumferential surface of the rear opening of the wrapped portion 302E around the X direction are bonded to each other by thermal bonding, for example. In this way, a rear sealing portion 520E is formed.

As illustrated in Figs. 23 and 24, when viewed from the front, the drawn portion 304E is drawn from a corner of the wrapped portion 302E on an upper left side of the battery element 100E.
Specifically, as illustrated in Fig. 24, the drawn portion 304E includes a first drawn portion 304aE and a second drawn portion 304bE. The first drawn portion 304aE is drawn from one of both ends of the wrapped portion 302E in a circumferential direction around the X direction. The second drawn portion 304bE is drawn from the other of both ends of the wrapped portion 302E in the circumferential direction around the X direction. The first drawn portion 304aE and the second drawn portion 304bE are bonded to each other by thermal bonding, for example. In this way, when viewed from the front, a lateral sealing portion 530E is formed. The drawn portion 304E is folded along an upper surface of the battery element 100E. However, the drawn portion 304E may not be folded. A shape of the fold of the drawn portion 304E is not limited to the shape according to the fifth embodiment.

As illustrated in Figs. 23 to 25, the reinforcing plate 400E is disposed above the drawn portion 304E. The reinforcing plate 400E is provided along a longitudinal direction of the upper surface of the battery element 100E. In this way, the reinforcing plate 400E can function as a reinforcing body that reinforces strength in the X direction of the battery element 100E. The strength in a longitudinal direction of the battery cell 10E can be accordingly more secured in the fifth embodiment than when the reinforcing plate 400E is not provided. A position in which the reinforcing plate 400E is disposed is not limited to the examples illustrated in Figs. 23 to 25. For example, the reinforcing plate 400E may be disposed along at least a part of a lower surface, a left side surface, and a right side surface of the battery element 100E.

A front end of the reinforcing plate 400E is bonded to the front lid member 210E by laser welding, for example. A rear end of the reinforcing plate 400E is bonded to the rear lid member 220E by laser welding, for example. Rigidity of each of the front lid member 210E, the rear lid member 220E, and the reinforcing plate 400E can be greater than rigidity of the battery element 100E. In the fifth embodiment, the strength of the battery element 100E can be thus reinforced from at least three directions by the front lid member 210E, the rear lid member 220E, and the reinforcing plate 400E.

The reinforcing plate 400E may not be bonded to the front lid member 210E and the rear lid member 220E. Alternatively, the reinforcing plate 400E may be bonded to only one of the front lid member 210E and the rear lid member 220E.

Next, one example of a method of manufacturing the battery cell 10E according to the fifth embodiment will be described. In this example, the battery cell 10E is manufactured as follows.

First, the battery element 100E is manufactured. The battery element 100E includes at least one positive electrode, at least one negative electrode, and at least one separator.

Next, the positive electrode tab 110E and the front lid member 210E are bonded to each other. Similarly, the negative electrode tab 120E and the rear lid member 220E are bonded to each other. Next, the positive electrode tab 110E and the positive electrode current collector 102aE are bonded to each other. Similarly, the negative electrode tab 120E and the negative electrode current collector 104aE are bonded to each other. However, after the positive electrode tab 110E and the positive electrode current collector 102aE are bonded to each other, the positive electrode tab 110E and the front lid member 210E may be bonded to each other. Similarly, after the negative electrode tab 120E and the negative electrode current collector 104aE are bonded to each other, the negative electrode tab 120E and the rear lid member 220E may be bonded to each other.

Next, the exterior film 300E is wrapped one revolution around the X direction of the battery element 100E, the front lid member 210E, and the rear lid member 220E. In this way, the wrapped portion 302E is formed. An extra length of the exterior film 300E is drawn as the drawn portion 304E.

Next, the outer circumferential surface of the front lid member 210E around the X direction and the inner circumferential surface of the front opening of the wrapped portion 302E around the X direction are bonded to each other by thermal bonding. In this way, the front sealing portion 510E is formed. Next, the outer circumferential surface of the rear lid member 220E around the X direction and the inner circumferential surface of the rear opening of the wrapped portion 302E around the X direction are bonded to each other by thermal bonding. In this way, the rear sealing portion 520E is formed.

Next, an electrolytic solution is injected into the housing space 500E via a gap between the first drawn portion 304aE and the second drawn portion 304bE. Next, the vacuum is drawn from the housing space 500E via the gap between the first drawn portion 304aE and the second drawn portion 304bE. Next, the lateral sealing portion 530E is formed by bonding the first drawn portion 304aE and the second drawn portion 304bE by thermal bonding. In this way, the housing space 500E is vacuum-sealed.

A method of vacuum-sealing the housing space 500E is not limited to the above-described example. In another example, first, the lateral sealing portion 530E is formed by bonding the first drawn portion 304aE and the second drawn portion 304bE by thermal bonding. Next, an electrolytic solution is injected into the housing space 500E via a solution injection hole provided in at least one of the front lid member 210E and the rear lid member 220E. Next, the vacuum is drawn from the housing space 500E via the solution injection hole. Next, the solution injection hole is covered by a predetermined lid member.

Next, the drawn portion 304E is folded along the upper surface of the battery element 100E.

Next, the reinforcing plate 400E is attached above the drawn portion 304E.

In this way, the battery cell 10E is manufactured.

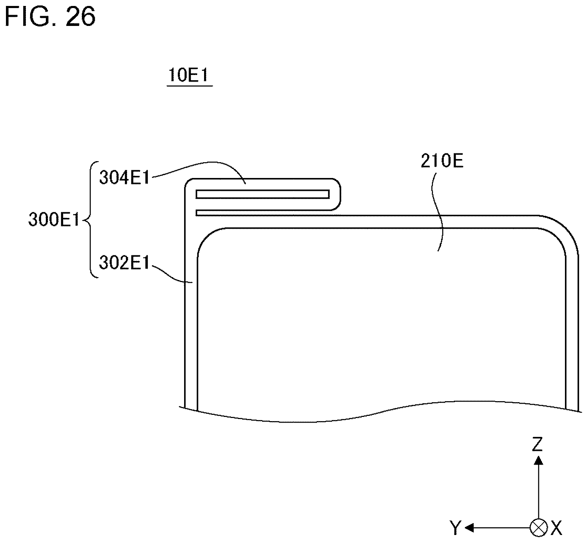

Fig. 26 is a diagram illustrating a battery cell 10E1 according to a variant. The battery cell 10E1 according to the variant is similar to the battery cell 10E according to the fifth embodiment except for the following points.

An exterior film 300E1 of the battery cell 10E1 according to the variant includes a wrapped portion 302E1 and a drawn portion 304E1. Similarly to the wrapped portion 302E according to the fifth embodiment, the wrapped portion 302E1 according to the variant is wrapped one revolution around the X direction of the battery element 100E, the front lid member 210E, and the rear lid member 220E. Similarly to the drawn portion 304E according to the fifth embodiment, the drawn portion 304E1 according to the variant is drawn from the wrapped portion 302E1.

In the example illustrated in Fig. 26, when viewed from the X direction, the drawn portion 304E1 has two folds. Specifically, when viewed from the X direction, a base end portion of the drawn portion 304E1 is folded from the top to the right near a corner on an upper left side of the front lid member 210E. When viewed from the X direction, a substantially central portion of the drawn portion 304E1 is folded from the right to the left above the front lid member 210E. The rigidity in the X direction of the drawn portion 304E1 can be therefore more improved than when the drawn portion 304E1 is simply drawn. The drawn portion 304E1 can thus function as a reinforcing body that reinforces strength in the X direction of the battery element 100E. The strength in a longitudinal direction of the battery cell 10E1 can be accordingly more secured in the variant than when the drawn portion 304E1 is simply drawn.

In the example illustrated in Fig. 26, when viewed from the X direction, a tip of the drawn portion 304E1 is folded toward the inside of the drawn portion 304E1. Thus, the tip of the drawn portion 304E1 can be prevented from being exposed to the outside of the drawn portion 304E1. For example, the drawn portion 304E1 may include a conductor such as a conductive sheet. The conductor may be exposed from the tip of the drawn portion 304E1. In the example illustrated in Fig. 26, the conductor exposed from the tip of the drawn portion 304E1 can be prevented from being exposed to the outside of the drawn portion 304E1. Accordingly, a short circuit of the exterior film 300E1 via the conductor can be suppressed.

A state of the fold of the drawn portion 304E1 is not limited to the example illustrated in Fig. 26. For example, when viewed from the X direction, the drawn portion 304E1 may have three or more folds. In other words, when viewed from the X direction, the drawn portion 304E1 may have a plurality of folds.

In the variant, similarly to the fifth embodiment, the reinforcing plate 400E may be further provided. In this case, both of the drawn portion 304E1 and the reinforcing plate 400E can function as a reinforcing body that reinforces strength in the X direction of the battery element 100E.

While the fifth embodiment and the variant of the present invention have been described with reference to the drawings, the embodiment and the variant are only exemplification of the present invention, and various configurations other than the above may be employed.

For example, in the fifth embodiment, the reinforcing plate 400E is provided outside the exterior film 300E. However, the reinforcing plate 400E may be provided inside the exterior film 300E.

In the fifth embodiment, the positive electrode tab 110E and the negative electrode tab 120E are disposed on opposite sides to each other in the X direction of the battery element 100E. However, both of the positive electrode tab 110E and the negative electrode tab 120E may be disposed on only one of a front side and a rear side in the X direction of the battery element 100E. In this case, for example, two lid members cover the front end portion and the rear end portion of the battery element 100E. Alternatively, a lid member may cover only a side of the battery element 100E from which the positive electrode tab 110E and the negative electrode tab 120E are drawn. In this example, the exterior film 300E may be sealed and folded along the battery element 100E on an opposite side to the lid member of the battery element 100E.

## Claims

1. A battery cell (10A) comprising:
a battery element (100A);
a lid member (210A, 220A) covering one end portion of the battery element (100A) in a predetermined direction; and
an exterior film (300A) at least partially wrapped around the predetermined direction of the battery element (100A), wherein
the exterior film (300A) is rounded along the battery element (100A) in at least one corner of the battery element (100A) around the predetermined direction.

2. The battery cell (10A) according to claim 1, wherein
a corner of the lid member (210A, 220A) aligned in the predetermined direction with the at least one corner of the battery element (100A) is rounded.

3. The battery cell (10A) according to claim 1 or 2, wherein
a fold is provided in at least one corner of the exterior film (300A) around the predetermined direction of the battery element (100A).

4. The battery cell (10A) according to claim 1 or 2, further comprising
another lid member (210A, 220A) covering another end portion of the battery element (100A) in the predetermined direction.

5. A battery cell (10B, 10B1) comprising:
a battery element (100B);
a lid member (210B, 220B) covering an end portion of the battery element (100B); and
an exterior film (300B, 300B1) including a wrapped portion (302B, 302B1) wrapped around the battery element (100B), and a drawn portion (304B, 304B1) drawn from the wrapped portion (302B, 302B1), wherein
at least a part of the wrapped portion (302B, 302B1) and at least a part of the drawn portion (304B, 304B1) are bonded to each other.

6. The battery cell (10B, 10B1) according to claim 5, wherein
a bonding portion between the wrapped portion (302B, 302B1) and the drawn portion (304B, 304B1) overlaps at least a part of a surface of the battery element (100B) facing in a predetermined direction.

7. The battery cell (10B, 10B1) according to claim 5, wherein
the battery element (100B) has a length in a predetermined first direction between the end portion and another end portion on a side opposite to the end portion, a width in a second direction orthogonal to the first direction, and a thickness, in a third direction orthogonal to the first direction and the second direction, shorter than the width, and
a bonding portion between the wrapped portion (302B, 302B1) and the drawn portion (304B, 304B1) overlaps at least a part of a surface of the battery element (100B) substantially perpendicular to the third direction.

8. The battery cell (10B, 10B1) according to claim 5, wherein
the battery element (100B) has a length in a predetermined first direction between the end portion and another end portion on a side opposite to the end portion, a width in a second direction orthogonal to the first direction, and a thickness, in a third direction orthogonal to the first direction and the second direction, shorter than the width, and
a bonding portion between the wrapped portion (302B, 302B1) and the drawn portion (304B, 304B1) overlaps at least a part of a surface of the battery element (100B) substantially perpendicular to the second direction.

9. The battery cell (10B, 10B1) according to any one of claims 5 to 8, wherein
a bonding portion between the wrapped portion (302B, 302B1) and the drawn portion (304B, 304B1) is located in any portion other than a lower portion around the battery element (100B).

10. A battery cell (10E, 10E1) comprising:
a battery element (100E);
a lid member (210E, 220E) covering an end portion of the battery element (100E) in a longitudinal direction;
an exterior film (300E, 300E1) at least partially wrapped around the longitudinal direction of the battery element (100E); and
a reinforcing body provided along the longitudinal direction of the battery element (100E).

11. The battery cell (10E, 10E1) according to claim 10, wherein
one end of the reinforcing body in the longitudinal direction is bonded to the lid member (210E, 220E).

12. The battery cell (10E1) according to claim 10 or 11, wherein
at least a part of the reinforcing body includes a drawn portion (304E1) of the exterior film (300E1) having a plurality of folds.
